# EUROPEAN PATENT SPECIFICATION

(11) **EP 4 608 926 B1**
(45) Date of publication and mention of the grant of the patent: **01.07.2026**
(21) Application number: 23790600.3
(22) Date of filing: 16.10.2023
(51) Int. Cl.: C09J 123/14, C08F 8/42, C08F 210/06, C08F 230/08

(54) **HOT MELT ADHESIVE COMPRISING SILOXIDE-FUNCTIONALIZED POLYOLEFINS**
SCHMELZKLEBSTOFF MIT SILOXIDFUNKTIONALISIERTEN POLYOLEFINEN
ADHÉSIF THERMOFUSIBLE COMPRENANT DES POLYOLÉFINES FONCTIONNALISÉES PAR SILOXYDE

(30) Priority: 24.10.2022 EP 22203266
(43) Date of publication of application: 03.09.2025
(73) Proprietor: SABIC Global Technologies B.V., 4612 PX Bergen op Zoom (NL)
(72) Inventor: JASINSKA-WALC, Lidia, 6160 GA Geleen (NL); BOUYAHYI, Miloud, 6160 GA Geleen (NL); DUCHATEAU, Robbert, 6160 GA Geleen (NL); KRUSZYNSKI, Jakub, 6160 GA Geleen (NL); NOWICKA, Weronika, 6160 GA Geleen (NL)
(74) Representative: Sabic Intellectual Property Group
(86) International application number: PCT/EP2023/078624
(87) International publication number: WO 2024/088806

(56) References cited:
- EP-A2- 1 186 619
- WO-A1-2018/099816

## Description

### TECHNICAL FIELD OF THE INVENTION

The present invention relates to hot melt adhesive comprising siloxide-functionalized polyolefins.

### TECHNOLOGICAL BACKGROUND OF THE INVENTION

Hot Melt Adhesive (HMA) also known as hot glue is a thermoplastic adhesive resin that is solid at ambient temperature and can be molten to apply it on a surface. Most commonly, HMAs comprise EVA or polyolefin elastomers. Other examples are thermoplastic polyurethanes (TPU), styrene block copolymers (SBC), polyamides or polyesters.

The HMAs are produced in several forms, such as sticks, pellets, beads, granulates, pastilles, chips, slugs, flyers, pillows, blocks, films or spray and are used in various applications like packaging, hygiene products, furniture, footwear, textile & leather, electronics, book binding and graphics, building & construction, consumer DIY.

HMA provide several advantages over solvent-based adhesives. Volatile organic compounds are reduced or eliminated and drying or curing steps, typically required for 2 component adhesives, are eliminated. Furthermore, HMA typically have high mileage, low odor and are thermally stable. HMA have long shelf life and usually can be disposed of without special precautions. Furthermore, being a thermoplast, a HMA bond can be simply reversed by heating the substrate. The obvious drawback of this reversible bonding is the loss of bond strength at higher temperatures, up to complete melting of the adhesive. Hence, the use of HMA is limited to applications not exposed to elevated temperatures.

Polyolefin-based HMA's show good adhesion to low surface-energy materials such as untreated polyolefins or they can be applied to porous materials such as paper, carton or wood where the adhesion is obtained by physical inclusion of the HMA in the porous material. However, these polyolefin-based HMA's typically show low adhesive strength to polar materials such as metals, glass and polar polymeric materials.

EP1186619 discloses the use of polar functionalized monomer having more than 13 carbons C₁₃ in a polyolefin based HMA to improve the adhesion to polar substrates such as polycarbonates and aluminum.

WO2018/099816 disclose use of ethylene polymer compositions for adhesive composition which comprise a copolymer of ethylene and a units derived from silane group containing olefin such as vinyl trimethylsilane.

However, HMA containing such functionalized monomer have a limited adhesive strengths.

It is an object of the present invention to provide a hot melt adhesive comprising a siloxide functionalized olefin copolymer having excellent adhesion properties to metals or polar and nonpolar resins.

There is a need for a new hot melt adhesive having at least one of the following binding properties:
- Steel to steel with a Lap Shear Strength above 3 MPa
- Aluminum to aluminum with a Lap Shear Strength above 3 MPa
- Aluminum to polyolefin with a Lap Shear Strength above 1 MPa, preferably above 3 MPa,
- Steel to polyolefin with a Lap Shear Strength above 3 MPa
- Polyolefin to polyolefin with a Lap Shear Strength above 3 MPa

### SUMMARY

This object is achieved by the present invention, an hot melt adhesive comprising a polar group-containing olefin polymer having:
- at least 80 mol% of a constituent unit represented by the following formula (1),
- optionally a constituent unit represented by the following formula (2), and
- between 0.1 to 1 mol%, preferably 0.1 to 0.5 mol%, of a constituent unit represented by the following formula (3): 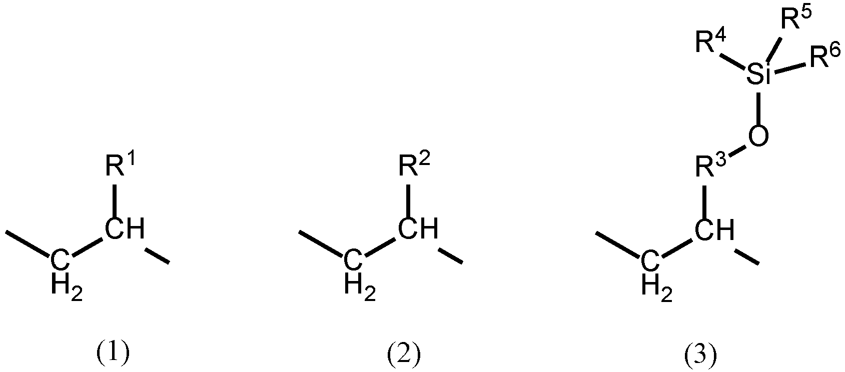
Wherein:
- R¹ is H or CH₃.
- R² is selected from the list comprising: hydrocarbyl group having 0 to 10 carbon atoms, preferentially 1 to 6 and more preferentially 1 or 6 when R¹ = H, and preferably 0, 2, 4 or 6 when R¹ = CH₃,
- R³ is either selected from the list comprising: hydrocarbyl group having 1 to 10 carbon atoms, preferentially 2 to 8, preferentially 4 to 8, more preferentially 4 or 6,
- R⁴, R⁵, R⁶ can be identical or different and selected from the list comprising a hydrocarbyl group having 1 to 10 carbon atoms, preferentially 1 to 6 and more preferentially 1 to 4 carbon atoms or a combination of 1 and/or 3 and/or 4 carbon atoms.

In some embodiment, polar group-containing olefin polymer is having at least one of the followings, preferably two, more preferably four, more preferably three, more preferably all of the following
- Number average molecular weight (Mn) between 5 to 50 kg/mol, preferably 10 to 50 kg/mol, preferably between 20 to 50 kg/mol, measured by the method described in the section "Size exclusion chromatography (SEC)" of the Measurement methods section of the present disclosure,
- Crystallinity (*X_{c}*) content below 30%, preferably below 15%, more preferably below 10%, measured by the method described in the section "Differential scanning calorimetry (DSC)" of the Measurement methods section of the present disclosure,
- Enthalpy (Δ*H*) between 5 to 65 J/g, preferably 5 to 30 J/g, measured by the method described in the section "Differential scanning calorimetry (DSC)" of the Measurement methods section of the present disclosure,
- Polydispersity index (*Ð*) from 2 to 6, preferably between 3 to 6, more preferably between 4 to 6, measured by the method described in the section "Size exclusion chromatography (SEC)" of the Measurement methods section of the present disclosure,
- Melting temperature (*T*ₘ) between 40 and 120 °C, measured by the method described in the section "Differential scanning calorimetry (DSC)" of the Measurement methods section of the present disclosure.

In some embodiment, the constituent unit represented by the following formula (3) is the polymerization unit from one of the following monomers selected from the group comprising (allyloxy)trimethylsilane, (allyloxy)triethylsilane, (allyloxy)triisopropylsilane, *tert-*butyl(allyloxy)dimethylsilane, (allyloxy)dimethylphenylsilane, (but-3-en-1-yloxy)trimethylsilane, (but-3-en-1-yloxy)triethylsilane, (but-3-en-1-yloxy)triisopropylsilane, *tert*-butyl(but-3-en-1-yloxy)dimethylsilane, (but-3-en-1-yloxy)dimethylphenylsilane, (hex-5-en-1-yloxy)trimethylsilane, (hex-5-en-1-yloxy)triethylsilane, (hex-5-en-1-yloxy)triisopropylsilane, *tert*-butyl(hex-5-en-1-yloxy)dimethylsilane, (hex-5-en-1-yloxy)dimethylphenylsilane, trimethyl(undec-10-en-1-yloxy)silane, triethyl(undec-10-en-1-yloxy)silane, triisopropyl(undec-10-en-1-yloxy)silane, *tert-*butyldimethyl(undec-10-en-1-yloxy)silane, dimethylphenyl(undec-10-en-1-yloxy)silane, preferably (hex-5-en-1-yloxy)trimethylsilane, *tert*-butyl(hex-5-en-1-yloxy)dimethylsilane.

In some embodiment, the polymerization of the polar group-containing olefin polymer has been performed using a solution process.

In some embodiment, a siloxide-functionalized C₃ to C₁₂ monomer, preferably C₄ to C₁₀, preferably C₆ to C₁₀, preferably C₆ to C₈ olefin monomer has been used during the polymerization.

In some embodiment, the hot melt adhesive resin is produced by treatment of a corresponding hydroxyl-functionalized co- or terpolymer with a silylation agent, wherein the hydroxyl-functionalized co- or terpolymer has been previously produced by the solution polymerization of one or more olefin monomer and a hydroxyl-functionalized olefin monomer, which was prior protected with an aluminum trialkyl.

In some embodiment, the hot melt adhesive according to the invention is having at least one, preferably two, more preferably three, more preferably four, more preferably all of the following binding properties, which have been measured by the method described in the section "Lap Shear Strength" of the Measurement methods section wherein the measurements were performed with a Zwick type Z020 tensile tester equipped with a 10 kN load cell. Before measurements, samples were conditioned for 7 days at room temperature. The tests were performed on specimens (10 cm × 2.5 cm) with surface overlapping 12.5 mm. A grip-to-grip separation of 140 mm was used. The samples were pre-stressed to 3 N, then loaded with a constant cross-head speed 100 mm·min⁻¹. To calculate the lap shear strength the reported force value divided by the bonding surface (25 mm × 12.5 mm) of the specimens; the reported values are an average of at least 5 measurements of each composition:
- Steel to steel with a Lap Shear Strength above 3 MPa, preferably above 4.5 MPa, more preferably above 5 MPa, even more preferably above 6 MPa,
- Aluminum to aluminum with a Lap Shear Strength above 3 MPa, preferably above 4.5 MPa, more preferably above 5 MPa, even more preferably above 6 MPa,
- Steel to polyolefin with a Lap Shear Strength above 3 MPa,
- Aluminum to polyolefin with a Lap Shear Strength above 1 MPa, preferably above 2.5 MPa, more preferably 3 MPa,
- Polyolefin to polyolefin with a Lap Shear Strength above 3 MPa.

In some embodiment, the hot melt adhesive according to the invention comprises:
a. Polymer part, between 16-100 wt%, preferably 30-50 wt% of the hot melt adhesive,
b. Tackifiers, between 0-70 wt%, preferably 20-40wt%, of the hot melt adhesive,
c. Plasticizers, such as processing oils and waxes, between 0-40 wt%, preferably 10-40wt% of the hot melt adhesive,
d. Filler, between 0-10 wt% of the hot melt adhesive,
e. Antioxidants, between 0-3 wt% of the hot melt adhesive,
f. Pigment, between 0-1 wt% of the hot melt adhesive,
wherein the hot melt adhesive further comprise the polar group-containing olefin polymer according to the invention, and the polar group-containing olefin polymer is at least a part of the Polymer part, more preferably it is 100% of the Polymer part, the remaining part of the Polymer part, if present, is another polymer, preferably an olefin polymer.

Another aspect of the invention is a polar group-containing olefin polymer according to the following formula (4) 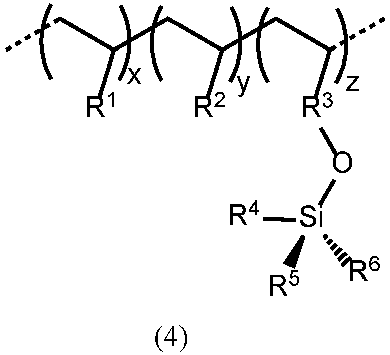 wherein
- z is 0.1 to 1 mol%,
- x is at least 80 mol%,
- y is 0 or 100-(x+z) mol%,
- R¹ is H or CH₃,
- R² is selected from the list comprising: hydrocarbyl group having 0 to 10 carbon atoms, preferentially 1 to 6 and more preferentially 1 or 6 when R¹ = H, and preferably 0, 2, 4 or 6 when R¹ = CH₃,
- R³ is a hydrocarbyl group having 1 to 10 carbon atoms, preferentially 2 to 8, preferentially 4 to 8, more preferentially 4 or 6,
- R⁴, R⁵, R⁶ are identical or different and selected from the list comprising a hydrocarbyl group having 1 to 10 carbon atoms, preferentially 1 to 6 and more preferentially 1 to 4 carbon atoms or a combination of 1 and/or 3 and/or 4 carbon atoms.

In some embodiment, the polymerization of the polar group-containing olefin polymer has been performed using a solution process, with preferably a catalyst system comprising a the metal catalyst or catalyst precursor comprising a metal from Group 3-8, more preferably from Group 3-6 and/or wherein the metal catalyst comprises a metal selected from the group consisting of Ti, Zr, Hf, V, Cr, Fe, Co, Ni, Pd, preferably Zr or Hf, preferably a homogeneous single site catalyst, more preferably a hafnium complex of a polyvalent aryloxyether or a zirconium complex of a polyvalent aryloxyether.

In some embodiment, the polar group-containing olefin polymer according the preceding claim wherein it is having at least one of the followings, preferably two, more preferably three, more preferably four, more preferably all of the followings:
- Number average molecular weight (Mn) between 5 to 50 kg/mol, preferably 10 to 50 kg/mol, preferably between 20 to 50 kg/mol, measured by the method described in the section "Size exclusion chromatography (SEC)" of the Measurement methods section of the present disclosure,
- Crystallinity (*X*_{c}) content below 30%, preferably below 15%, more preferably below 10%, measured by the method described in the section "Differential scanning calorimetry (DSC)" of the Measurement methods section of the present disclosure,
- Enthalpy (Δ*H*) between 5 to 65 J/g, preferably 5 to 30 J/g, measured by the method described in the section "Differential scanning calorimetry (DSC)" of the Measurement methods section of the present disclosure,
- Polydispersity index (*Ð*) from 2 to 6, preferably between 3 to 6, more preferably between 4 to 6,measured by the method described in the section "Size exclusion chromatography (SEC)" of the Measurement methods section of the present disclosure,
- Melting temperature (*T*ₘ) between 40 and 120 °C, measured by the method described in the section "Differential scanning calorimetry (DSC)" of the Measurement methods section of the present disclosure.

Another aspect of the invention is the use of the polar group-containing olefin polymer according to the invention, for the fabrication of a hot melt adhesive, photovoltaic encapsulants, bitumen binders, surface modifiers for polyolefin preferably for automotive and household appliances and compatibilizer.

Another aspect of the invention is the use of the hot melt adhesive according to the invention, in order to glue together metals, glass, stone, wood, polar polymers or metals to glass, metals to stone, metals to wood, metal to polar polymers, glass to stone, glass to wood, glass to polar polymers, stone to wood, stone to polar polymers, wood to polar polymers, metals to polyolefins, glass to polyolefins, stone to polyolefins, wood to polyolefins or polar polymers to polyolefins, wherein stone are being as mineral material such as for example, granite, basalt, limestone, or artificial stone such as concrete or brick stone.

A final aspect of the invention is the use of hot melt adhesive according to the invention in order to glue together metals, glass, stone, wood, polar polymers or metals to glass, metals to stone, metals to wood, metal to polar polymers, glass to stone, glass to wood, glass to polar polymers, stone to wood, stone to polar polymers, wood to polar polymers, metals to polyolefins, glass to polyolefins, stone to polyolefins, wood to polyolefins or polar polymers to polyolefins, wherein stone are being as mineral material such as for example, granite, basalt, limestone, or artificial stone such as concrete or brick stone.

### DETAILED DESCRIPTION

The present invention preferably relates to a polyolefin-based hot melt adhesive resin a polar group-containing olefin polymer, preferably comprising siloxide functionalities as polar group.

According to the invention, the polyolefin-based hot melt adhesive resin is a copolymer of at least one first olefin monomer and a siloxide functionalized C₂ to C₁₂, preferably C₄ to C₁₂, more preferably C₄ to C₁₀ olefin monomer, and according to formula (4), 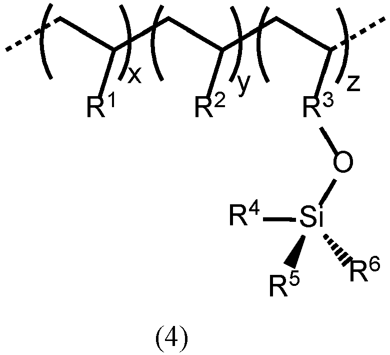 wherein
z is 0.1 to 1 mol%,
x is at least 80 mol%,
y is 0 or 100-(x+z) mol%,
R¹ is H or CH₃,
R² is selected from the list comprising: hydrocarbyl group having 0 to 10 carbon atoms, preferentially 1 to 6 and more preferentially 1 or 6 when R¹ = H, and preferably 0, 2, 4 or 6 when R¹ = CH₃,
R³ is a hydrocarbyl group having 1 to 10 carbon atoms, preferentially 2 to 8, preferentially 4 to 8, more preferentially 4 or 6,
R⁴, R⁵, R⁶ can be identical or different and selected from the list comprising a hydrocarbyl group having 1 to 10 carbon atoms, preferentially 1 to 6 and more preferentially 1 to 4 carbon atoms or a combination of 1 and/or 3 and/or 4 carbon atoms.

In some embodiment, polar group-containing olefin polymer is having at least one of the followings, preferably two, more preferably four, more preferably three, more preferably all of the following
- Number average molecular weight (Mn) between 5 to 50 kg/mol, preferably 10 to 50 kg/mol, preferably between 20 to 50 kg/mol, measured by the method described in the section "Size exclusion chromatography (SEC)" of the Measurement methods section of the present disclosure,
- Crystallinity (*X*_{c}) content below 30%, preferably below 15%, more preferably below 10%, measured by the method described in the section "Differential scanning calorimetry (DSC)" of the Measurement methods section of the present disclosure,
- Enthalpy (Δ*H*) between 5 to 65 J/g, preferably 5 to 30 J/g, measured by the method described in the section "Differential scanning calorimetry (DSC)" of the Measurement methods section of the present disclosure,
- Polydispersity index (*Ð*) from 2 to 6, preferably between 3 to 6, more preferably between 4 to 6, measured by the method described in the section "Size exclusion chromatography (SEC)" of the Measurement methods section of the present disclosure,
- Melting temperature (*T*ₘ) between 40 and 120 °C, measured by the method described in the section "Differential scanning calorimetry (DSC)" of the Measurement methods section of the present disclosure.

In some embodiment, the first olefin monomer is ethylene or propylene, preferably propylene.

In some embodiment, the hot melt adhesive resin according to the invention is a polyolefin-based copolymer, preferably a terpolymer resulting from the polymerization of a first olefin monomer, with optionally a second olefin monomer selected from the list comprising ethylene or C₃ to C₁₂ olefin monomer and a third - functionalized - olefin monomer, which is selected from the list comprising a siloxide functionalized C₃ to C₁₂, preferably C₄ to C₁₀ olefin monomer.

In some embodiment, when the first olefin monomer is ethylene, preferably the second olefin monomer is propylene, 1-butene, 1-hexene or 1-octene, more preferably propylene or 1-octene.

In some embodiment, when the first olefin monomer is propylene, preferably the second olefin monomer is ethylene, 1-butene, 1-hexene or 1-octene.

In some embodiment, the third monomer is a siloxide functionalized olefin monomer, preferably selected from the group comprising (allyloxy)trimethylsilane, (allyloxy)triethylsilane, (allyloxy)triisopropylsilane, *tert*-butyl(allyloxy)dimethylsilane, (allyloxy)dimethylphenylsilane, (but-3-en-1-yloxy)trimethylsilane, (but-3-en-1-yloxy)triethylsilane, (but-3-en-1-yloxy)triisopropylsilane, tert-butyl(but-3-en-1-yloxy)dimethylsilane, (but-3-en-1-yloxy)dimethylphenylsilane, (hex-5-en-1-yloxy)trimethylsilane, (hex-5-en-1-yloxy)triethylsilane, (hex-5-en-1-yloxy)triisopropylsilane, *tert-*butyl(hex-5-en-1-yloxy)dimethylsilane, (hex-5-en-1-yloxy)dimethylphenylsilane, trimethyl(undec-10-en-1-yloxy)silane, triethyl(undec-10-en-1-yloxy)silane, triisopropyl(undec-10-en-1-yloxy)silane, *tert*-butyldimethyl(undec-10-en-1-yloxy)silane, dimethylphenyl(undec-10-en-1-yloxy)silane, more preferably (hex-5-en-1-yloxy)trimethylsilane, *tert*-butyl(hex-5-en-1-yloxy)dimethylsilane preferably (hex-5-en-1-yloxy)trimethylsilane, (hex-5-en-1-yloxy)triethylsilane, (hex-5-en-1-yloxy)triisopropylsilane or *tert*-butyl(hex-5-en-1-yloxy)dimethylsilane, more preferably (hex-5-en-1-yloxy)trimethylsilane or *tert*-butyl(hex-5-en-1-yloxy)dimethylsilane.

In some embodiment, the hot melt adhesive resin is made in a solution process using a siloxide-functionalized C₃ to C₁₂ monomer, preferably C₄ to C₁₀, preferably C₆ to C₁₀, preferably C₆ to C₈ olefin monomer.

In some embodiment, the hot melt adhesive resin is produced by treatment of a corresponding hydroxyl-functionalized co- or terpolymer with a silylation agent, wherein the hydroxyl-functionalized co- or terpolymer has been previously produced by a polymerization of one or more olefin monomer and a hydroxyl-functionalized olefin monomer which was prior protected with an aluminum trialkyl, as describe in PCT/EP2021/082511.

The process embodiment using directly a siloxide-functionalized C₃ to C₁₂ monomer, is preferred as it does not require a purification step to remove the protection agent from the hydroxyl-functionality from the co- or terpolymer.

The tunable functionality of these functionalized olefin terpolymer HMA's makes them very suitable for gluing the same or different polar substrates such as metals, glass, stone, wood and polar polymers.

The general apolar nature of the functionalized olefin terpolymer HMA's furthermore provides excellent adhesion to low surface energy substrates such as polyolefins (i.e. HDPE, LDPE, LLDPE, PP), making these HMA's very suitable for gluing polyolefins to polyolefins, or for gluing polyolefins to polar substrates such as metals, glass, wood and polar polymers.

Hot melt adhesive comprising a polar group-containing olefin polymer which is having:
- at least 80 mol% of a constituent unit represented by the following formula (1),
- optionally a constituent unit represented by the following formula (2), and
- between 0.1 to 1 mol%, preferably 0.1 to 0.5 mol%, of a constituent unit represented by the following formula (3): 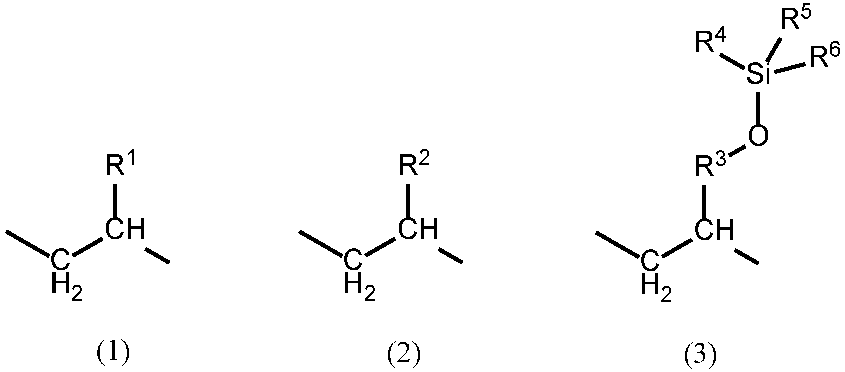 Wherein:
   - R¹ is H or CH₃.
   - R² is selected from the list comprising: hydrocarbyl group having 0 to 10 carbon atoms, preferentially 1 to 6 and more preferentially 1 or 6 when R¹ = H, and preferably 0, 2, 4 or 6 when R¹ = CH₃,
   - R³ is either selected from the list comprising: hydrocarbyl group having 1 to 10 carbon atoms, preferentially 2 to 8, preferentially 4 to 8, more preferentially 4 or 6,
   - R4, R5, R6 can be identical or different and selected from the list comprising a hydrocarbyl group having 1 to 10 carbon atoms, preferentially 1 to 6 and more preferentially 1 to 4 carbon atoms or a combination of 1 and/or 3 and/or 4 carbon atoms.

The hot melt adhesive according to the invention comprises:
a. Polymer part, between 16-100 wt%, preferably 30-50 wt% of the hot melt adhesive,
b. Tackifiers, between 0-70 wt%, preferably 20-40wt%, of the hot melt adhesive,
c. Plasticizers, such as processing oils and waxes, between 0-40 wt%, preferably 10-40wt% of the hot melt adhesive,
d. Filler, between 0-10 wt% of the hot melt adhesive,
e. Antioxidants, between 0-3 wt% of the hot melt adhesive,
f. Pigment, between 0-1 wt% of the hot melt adhesive,
wherein the hot melt adhesive further comprise the polar group-containing olefin polymer according to the invention, and the polar group-containing olefin polymer is at least a part of the Polymer part, more preferably it is 100% of the Polymer part, the remaining part of the Polymer part, if present, is another polymer, preferably an olefin polymer.

### Catalyst system suitable for the polymerization of process polar group-containing olefin polymer according to the invention.

The process according to the invention is performed in the presence of a suitable catalyst system, which comprise at least:
- A catalyst
- A co-catalyst
- Optionally a scavenger
- Optionally a chain transfer agent

### Catalyst

The catalyst is a metal catalyst or catalyst precursor comprising a metal from Group 3-10, preferably from Group 3-8 of the IUPAC Periodic Table of elements and/or wherein the metal catalyst comprises a metal selected from the group consisting of Ti, Zr, Hf, V, Cr, Fe, Co, Ni, Pd, preferably Zr or Hf, preferably a homogeneous single site catalyst.

In some embodiment, the catalyst is a ligand-metal complex having a bridged bis-bi-aryl structure. In particular, the ligands are dianionic chelating ligands that can occupy up to four coordination sites of a metal precursor atom and more specifically have a bridged-bis-bi-aryl structure.

In some embodiment, the metal-ligand complexes used in this invention can be characterized by the general formula: (4,O)MLn' (VI) where (4,O) is a dianionic ligand having at least 4 atoms that are oxygen and chelating to the metal M at 4 coordination sites through oxygen atoms with two of the bonds between the oxygen and the metal being covalent in nature and two of the bonds being dative in nature; M is a metal selected from the group consisting of group 4 of the Periodic Table of Elements, more specifically, from Hf or Zr, preferentially Hf; L is independently selected from the group consisting of halide (F, Cl, Br, I), optionally substituted alkyl, alkenyl, alkynyl, heteroalkyl, heteroalkenyl, heteroalkynyl, aryl, heteroaryl, alkoxyl, aryloxyl, silyl, boryl, phosphino, amino, alkylthio, arylthio, nitro, hydrido, borohydride, allyl, diene, phosphine, carboxylates, 1,3-dionates, oxalates, carbonates, nitrates, sulphates, ethers, thioethers and combinations thereof; and optionally two or more L groups may be linked together in a ring structure; n' is 1 , 2, 3, or 4.

In some embodiments, the metal-ligand complexes of this invention may be characterized by the general formula: 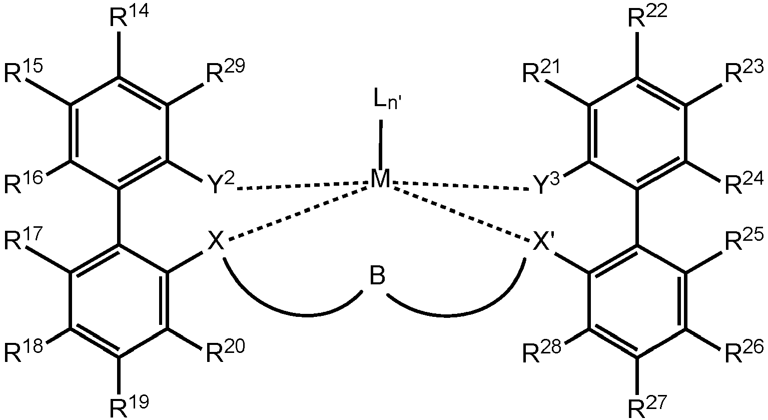 **Wherein**
- R¹⁴, R¹⁵, R¹⁶, R¹⁷, R¹⁸, R¹⁹, R²⁰, R²¹, R²², R²³, R²⁴, R²⁵, R²⁶, R²⁷, R²⁸ and R²⁹ are independently selected from the group consisting of hydride, halide, and optionally substituted hydrocarbyl, heteroatom-containing hydrocarbyl, alkoxy, aryloxy, silyl, boryl, phosphino, amino, alkylthio, arylthio, thioxy, seleno, nitro, and combinations thereof; optionally two or more R groups can combine together into ring structures, with such ring structures having from 3 to 100 atoms in the ring not counting hydrogen atoms
- M is a metal Hf or Zr,
- L is a moiety that forms a covalent, dative or ionic bond with M; and n' is 1, 2, 3 or 4.
- X, X', Y² and Y³ are oxygen atoms,
- B is a bridging group having from one to 50 atoms not counting hydrogen atoms, preferentially B is a propane bridge

In some preferred embodiments, the ligand-metal complex must be a hafnium or zirconium complex of a polyvalent aryloxyether, selected from the group comprising at least: bis((2-oxoyl-3-(1,2,3,4,6,7,8,9-octahydroanthracen-5-yl)-5-(methyl)phenyl)-2-phenoxy)-1,3-propanediylhafnium (IV) dimethyl, bis((2-oxoyl-3-(1,2,3,4,6,7,8,9-octahydroanthracen-5-yl)-5-(methyl)phenyl)-2-phenoxy)-1,3-propanediylhafnium (IV) dichloride, bis((2-oxoyl-3-(1,2,3,4,6,7,8,9-octahydroanthracen-5-yl)-5-(methyl)phenyl)-2-phenoxy)-1,3-propanediylhafnium (IV) dibenzyl, bis((2-oxoyl-3-(dibenzo-1H-pyrrole-1-yl)-5-(methyl)phenyl)-2-phenoxy)-1,3-propanediylhafnium (IV) dimethyl, bis((2-oxoyl-3-(dibenzo-1H-pyrrole-1-yl)-5-(methyl)phenyl)-2-phenoxy)-1,3-propanediylhafnium (IV) dichloride, bis((2-oxoyl-3-(dibenzo-1H-pyrrole-1-yl)-5-(methyl)phenyl)-2-phenoxy)-1,3-propanediylhafnium (IV) dibenzyl, bis((2-oxoyl-3-(1,2,3,4,6,7,8,9-octahydroanthracen-5-yl)-5-(methyl)phenyl)-2-phenoxymethyl)-1,4-butanediylhafnium (IV) dimethyl, bis((2-oxoyl-3-(1,2,3,4,6,7,8,9-octahydroanthracen-5-yl)-5-(methyl)phenyl)-2-phenoxymethyl)-1,4-butanediylhafnium (IV) dichloride, bis((2-oxoyl-3-(1,2,3,4,6,7,8,9-octahydroanthracen-5-yl)-5-(methyl)phenyl)-2-phenoxymethyl)-1,4-butanediylhafnium (IV) dibenzyl, bis((2-oxoyl-3-(dibenzo-1H-pyrrole-1-yl)-5-(methyl)phenyl)-2-phenoxymethyl)-1,4-butanediylhafnium (IV)dimethyl, bis((2-oxoyl-3-(dibenzo-1H-pyrrole-1-yl)-5-(methyl)phenyl)-2-phenoxymethyl)-1,4-butanediylhafnium (IV) dichloride, bis((2-oxoyl-3-(dibenzo-1H-pyrrole-1-yl)-5-(methyl)phenyl)-2-phenoxymethyl)-1,4-butanediylhafnium (IV) dibenzyl, bis((2-oxoyl-3-(1,2,3,4,6,7,8,9-octahydroanthracen-5-yl)-5-(methyl)phenyl)-2-phenoxy)-2,4-pentanediylhafnium (IV) dimethyl, bis((2-oxoyl-3-(1,2,3,4,6,7,8,9-octahydroanthracen-5-yl)-5-(methyl)phenyl)-2-phenoxy)-2,4-pentanediylhafnium (IV) dichloride, bis((2-oxoyl-3-(1,2,3,4,6,7,8,9-octahydroanthracen-5-yl)-5-(methyl)phenyl)-2-phenoxy)-2,4-pentanediylhafnium (IV) dibenzyl, bis((2-oxoyl-3-(dibenzo-1H-pyrrole-1-yl)-5-(methyl)phenyl)-2-phenoxy)-2,4-pentanediylhafnium (IV) dimethyl, bis((2-oxoyl-3-(dibenzo-1H-pyrrole-1-yl)-5-(methyl)phenyl)-2-phenoxy)-2,4-pentanediylhafnium (IV) dichloride, bis((2-oxoyl-3-(dibenzo-1H-pyrrole-1-yl)-5-(methyl)phenyl)-2-phenoxy)-2,4-pentanediylhafnium (IV) dibenzyl, bis((2-oxoyl-3-(1,2,3,4,6,7,8,9-octahydroanthracen-5-yl)-5-(methyl)phenyl)-2-phenoxymethyl)-methylenetrans-1,2-cyclohexanediylhafnium (IV) dimethyl, bis((2-oxoyl-3-(1,2,3,4,6,7,8,9-octahydroanthracen-5-yl)-5-(methyl)phenyl)-2-phenoxymethyl)-methylenetrans- 1,2-cyclohexanediylhafnium (IV) dichloride, bis((2-oxoyl-3-(1,2,3,4,6,7,8,9-octahydroanthracen-5-yl)-5-(methyl)phenyl)-2-phenoxymethyl)-methylenetrans- 1,2-cyclohexanediylhafnium (IV) dibenzyl, bis((2-oxoyl-3-(dibenzo-1H-pyrrole-1-yl)-5-(methyl)phenyl)-2-phenoxymethyl)-methylenetrans-1,2-cyclohexanediylhafnium (IV) dimethyl, bis((2-oxoyl-3-(dibenzo-1H-pyrrole-1-yl)-5-(methyl)phenyl)-2-phenoxymethyl)-methylenetrans-1,2-cyclohexanediylhafnium (IV) dichloride, and bis((2-oxoyl-3-(dibenzo-1H-pyrrole-1-yl)-5-(methyl)phenyl)-2-phenoxymethyl)-methylenetrans-1,2-cyclohexanediylhafnium (IV) dibenzyl, bis((2-oxoyl-3-(dibenzo-1H-pyrrole-1-yl)phenyl)-2-phenoxy)-1,3-propylhafnium (IV) dibenzyl, bis((2-oxoyl-3-(dibenzo-1H-pyrrole-1-yl)phenyl)-2-phenoxy)-1,4-n-butylhafnium (IV) dimethyl, bis((2-oxoyl-3-(dibenzo-1H-pyrrole-1-yl)phenyl)-2-phenoxy)-1,4-n-butylhafnium (IV) dibenzyl, bis((2-oxoyl-3-(3,6-bis(1,1-dimethylethyl)-9H-carbazolyl)phenyl)-2-phenoxy)-1,3-propylhafnium (IV) dimethyl, bis((2-oxoyl-3-(3,6-bis(1,1-dimethylethyl)-9H-carbazolyl)phenyl)-2-phenoxy)-1,3-propylhafnium (IV) dibenzyl, bis((2-oxoyl-3-(3,6-bis(1,1-dimethylethyl)-9H-carbazolyl)phenyl)-2-phenoxy)-1,4-n-butylhafnium (IV) dimethyl, bis((2-oxoyl-3-(3,6-bis(1,1-dimethylethyl)-9H-carbazolyl)phenyl)-2-phenoxy)-1,4-n-butylhafnium (IV) dibenzyl, bis((2-oxoyl-3-(4-methoxy-3,5-bis(1,1-dimethylethyl)phenyl)phenyl)-2-phenoxy)-1,4-n-butylhafnium (IV) dimethyl, bis((2-oxoyl-3-(4-methoxy-3,5-bis(1,1-dimethylethyl)phenyl)phenyl)-2-phenoxy)-1,4-n-butylhafnium (IV) dibenzyl, bis((2-oxoyl-3-(dibenzo-1H-pyrrole-1-yl)phenyl)-2-phenoxy)-1,2-ethylhafnium (IV) dimethyl, bis((2-oxoyl-3-(dibenzo-1H-pyrrole-1-yl)phenyl)-2-phenoxy)-1,2-ethylhafnium (IV) dibenzyl, bis((2-oxoyl-3-(dibenzo-1H-pyrrole-1-yl)phenyl)-2-phenoxy)-1,3-propylhafnium (IV) dimethyl; (OC-6-33)-[[2,2"'-[1,4-Butanediylbis(oxy-κO)]bis[3",5',5"-tris(1,1-dimethylethyl)[1,1':3',1"-terphenyl]-2'-olato-κO]](2-)]bis(phenylmethyl)hafnium; bis((2-oxoyl-3-(dibenzo-1H-pyrrole-1-yl)-5-(methyl)phenyl)-2-phenoxy)-2,4-pentanediylzirconium (IV) dimethyl, bis((2-oxoyl-3-(dibenzo-1H-pyrrole-1-yl)-5-(methyl)phenyl)-2-phenoxy)-2,4- pentanediylzirconium (IV) dichloride, bis((2-oxoyl-3-(1,2,3,4,6,7,8,9-octahydroanthracen-5-yl)-5-(methyl)phenyl)-2-phenoxy)-1,3-propanediylzirconium (IV) dimethyl, bis((2-oxoyl-3-(1,2,3,4,6,7,8,9-octahydroanthracen-5-yl)-5-(methyl)phenyl)-2-phenoxy)-1,3- propanediylzirconium (IV) dichloride, bis((2-oxoyl-3-(1,2,3,4,6,7,8,9-octahydroanthracen-5-yl)-5-(methyl)phenyl)-2-phenoxy)-1,3-propanediylzirconium (IV) dibenzyl, bis((2-oxoyl-3-(dibenzo-1H-pyrrole-1-yl)-5-(methyl)phenyl)-2-phenoxy)-1,3- propanediylzirconium (IV) dimethyl, bis((2-oxoyl-3-(dibenzo-1H-pyrrole-1-yl)-5-(methyl)phenyl)-2-phenoxy)-1,3- propanediylzirconium (IV) dichloride, bis((2-oxoyl-3-(dibenzo-1H-pyrrole-1-yl)-5-(methyl)phenyl)-2-phenoxy)-1,3- propanediylzirconium (IV) dibenzyl, bis((2-oxoyl-3-(1,2,3,4,6,7,8,9-octahydroanthracen-5-yl)-5-(methyl)phenyl)-2-phenoxymethyl)-1,4-butanediylzirconium (IV) dimethyl, bis((2-oxoyl-3-(1,2,3,4,6,7,8,9-octahydroanthracen-5-yl)-5-(methyl)phenyl)-2-phenoxymethyl)-1,4- butanediylzirconium (IV) dichloride, bis((2-oxoyl-3-(1,2,3,4,6,7,8,9-octahydroanthracen-5-yl)-5-(methyl)phenyl)-2-phenoxymethyl)-1,4-butanediylzirconium (IV) dibenzyl, bis((2-oxoyl-3-(dibenzo-1H-pyrrole-1-yl)-5-(methyl)phenyl)-2-phenoxymethyl)-1,4- butanediylzirconium (IV)dimethyl, bis((2-oxoyl-3-(dibenzo-1H-pyrrole-1-yl)-5-(methyl)phenyl)-2-phenoxymethyl)-1,4- butanediylzirconium (IV) dichloride, bis((2-oxoyl-3-(dibenzo-1H-pyrrole-1-yl)-5-(methyl)phenyl)-2-phenoxymethyl)-1,4- butanediylzirconium (IV) dibenzyl, bis((2-oxoyl-3-(1,2,3,4,6,7,8,9-octahydroanthracen-5-yl)-5-(methyl)phenyl)-2-phenoxy)-2,4- pentanediylzirconium (IV) dimethyl, bis((2-oxoyl-3-(1,2,3,4,6,7,8,9-octahydroanthracen-5-yl)-5-(methyl)phenyl)-2-phenoxy)-2,4- pentanediylzirconium (IV) dichloride, bis((2-oxoyl-3-(1,2,3,4,6,7,8,9-octahydroanthracen-5-yl)-5-(methyl)phenyl)-2-phenoxy)-2,4-pentanediylzirconium (IV) dibenzyl, bis((2-oxoyl-3-(dibenzo-1H-pyrrole-1-yl)-5-(methyl)phenyl)-2-phenoxy)-2,4- pentanediylzirconium (IV) dibenzyl, bis((2-oxoyl-3-(1,2,3,4,6,7,8,9-octahydroanthracen-5-yl)-5-(methyl)phenyl)-2-phenoxymethyl)-methylenetrans- 1,2-cyclohexanediylzirconium (IV) dimethyl, bis((2-oxoyl-3-(1,2,3,4,6,7,8,9-octahydroanthracen-5-yl)-5-(methyl)phenyl)-2-phenoxymethyl)-methylenetrans- 1,2- cyclohexanediylzirconium (IV) dichloride, bis((2-oxoyl-3-(1,2,3,4,6,7,8,9-octahydroanthracen-5-yl)-5-(methyl)phenyl)-2-phenoxymethyl)-methylenetrans- 1,2- cyclohexanediylzirconium (IV) dibenzyl, bis((2-oxoyl-3-(dibenzo-1H-pyrrole-1-yl)-5-(methyl)phenyl)-2-phenoxymethyl)-methylenetrans-1,2-cyclohexanediylzirconium (IV) dimethyl, bis((2-oxoyl-3-(dibenzo-1H-pyrrole-1-yl)-5-(methyl)phenyl)-2-phenoxymethyl)-methylenetrans-1,2- cyclohexanediylzirconium (IV) dichloride, and bis((2-oxoyl-3-(dibenzo-1H-pyrrole-1-yl)-5-(methyl)phenyl)-2-phenoxymethyl)-methylenetrans-1,2- cyclohexanediylzirconium (IV) dibenzyl, bis((2-oxoyl-3-(4-methoxy-3,5-bis(1,1-dimethylethyl)phenyl)phenyl)-2-phenoxy)-1,4-n-butylzirconium (IV) dimethyl, bis((2-oxoyl-3-(4-methoxy-3,5-bis(1,1-dimethylethyl)phenyl)phenyl)-2-phenoxy)-1,4-n-butylzirconium (IV) dibenzyl, bis((2-oxoyl-3-(dibenzo-1H-pyrrole-1-yl)phenyl)-2-phenoxy)-1,2-ethylzirconium (IV) dimethyl, bis((2-oxoyl-3-(dibenzo-1H-pyrrole-1-yl)phenyl)-2-phenoxy)-1,2-ethylzirconium (IV) dibenzyl, bis((2-oxoyl-3-(dibenzo-1H-pyrrole-1-yl)phenyl)-2-phenoxy)-1,3-propylzirconium (IV) dimethyl, bis((2-oxoyl-3-(dibenzo-1H-pyrrole-1-yl)phenyl)-2-phenoxy)-1,3-propylzirconium (IV) dibenzyl, bis((2-oxoyl-3-(dibenzo-1H-pyrrole-1-yl)phenyl)-2-phenoxy)-1,4-n-butylzirconium (IV) dimethyl, bis((2-oxoyl-3-(dibenzo-1H-pyrrole-1-yl)phenyl)-2-phenoxy)-1,4-n-butylzirconium (IV) dibenzyl, bis((2-oxoyl-3-(3,6-bis(1,1-dimethylethyl)-9H-carbazolyl)phenyl)-2-phenoxy)-1,3-propylzirconium (IV) dimethyl, bis((2-oxoyl-3-(3,6-bis(1,1-dimethylethyl)-9H-carbazolyl)phenyl)-2-phenoxy)-1,3-propylzirconium (IV) dibenzyl, bis((2-oxoyl-3-(3,6-bis(1,1-dimethylethyl)-9H-carbazolyl)phenyl)-2-phenoxy)-1,4-n-butylzirconium (IV) dimethyl, bis((2-oxoyl-3-(3,6-bis(1,1-dimethylethyl)-9H-carbazolyl)phenyl)-2-phenoxy)-1,4-n-butylzirconium (IV) dibenzyl; (OC-6-33)-[[2,2‴-[1,4-Butanediylbis(oxy-κO)]bis[3",5',5"-tris(1,1-dimethylethyl)[1,1':3',1"-terphenyl]-2'-olato-κO]](2-)]bis(phenylmethyl)zirconium, preferably bis((2-oxoyl-3-(dibenzo-1H-pyrrole-1-yl)-5-(methyl)phenyl)-2-phenoxy)-2,4-pentanediylzirconium (IV) dimethyl, bis((2-oxoyl-3-(dibenzo-1H-pyrrole-1-yl)-5-(methyl)phenyl)-2-phenoxy)-2,4-pentanediylzirconium (IV) dichloride, bis((2-oxoyl-3-(dibenzo-1H-pyrrole-1-yl)-5-(methyl)phenyl)-2-phenoxy)-2,4-pentanediylhafnium (IV) dimethyl, bis((2-oxoyl-3-(dibenzo-1H-pyrrole-1-yl)-5-(methyl)phenyl)-2-phenoxy)-2,4-pentanediylhafnium (IV) dichloride, bis((2-oxoyl-3-(dibenzo-1H-pyrrole-1-yl)-5-(methyl)phenyl)-2-phenoxy)-2,4-pentanediylhafnium (IV) dibenzyl, more preferably bis((2-oxoyl-3-(dibenzo-1H-pyrrole-1-yl)-5-(methyl)phenyl)-2-phenoxy)-2,4-pentanediylhafnium (IV) dimethyl, bis((2-oxoyl-3-(dibenzo-1H-pyrrole-1-yl)-5-(methyl)phenyl)-2-phenoxy)-2,4-pentanediylhafnium (IV) dichloride, bis((2-oxoyl-3-(dibenzo-1H-pyrrole-1-yl)-5-(methyl)phenyl)-2-phenoxy)-2,4-pentanediylhafnium (IV) dibenzyl.

### Co-catalyst

The co-catalyst is selected from the group: MAO, DMAO, MMAO, SMAO or ammonium salts or trityl salts of fluorinated tetraarylborates, preferably MAO, MMAO, trityl tetrakis(pentafluorophenyl)borate, dimethylanilinium or tri(alkyl)ammonium tetrakis (pentafluorophenyl)borate such as tri(n-butyl)ammonium tetrakis(pentafluorophenyl)borate, methyl di(alkyl)ammonium tetrakis(pentafluorophenyl)borate. More examples can be found in the review articles of Bochmann Organometallics 2010, 29, 4711-4740 and Chen and Marks Chem. Rev. 2000, 100, 1391-1434.

Methylaluminoxane or MAO as used in the present description may mean: a compound derived from the partial hydrolysis of trimethyl aluminum that serves as a co-catalyst for catalytic olefin polymerization.

Supported methylaluminoxane or SMAO as used in the present description may mean: a methylaluminoxane bound to a solid support.

Depleted methylaluminoxane or DMAO as used in the present description may mean: a methylaluminoxane from which the free trimethyl aluminum has been removed.

Modified methylaluminoxane or MMAO as used in the present description may mean: modified methylaluminoxane, viz. the product obtained after partial hydrolysis of trimethyl aluminum plus another trialkyl aluminum such as tri(isobutyl) aluminum or tri-n-octyl aluminum.

Fluorinated aryl borates as used in the present description may mean: a borate compound having four fluorinated (preferably perfluorinated) aryl ligands.

### Optional scavenger

A scavenger can optionally be added to the catalyst system in order to react with impurities that are present in the polymerization reactor, and/or in the solvent and/or monomer feed. This scavenger prevents poisoning of the catalyst during the olefin polymerization process. The optional scavenger is selected from the group: trimethylaluminum, triethylaluminum, triisobutylaluminum, trihexylaluminum, trioctylaluminum, preferably triethylaluminum. Surprisingly, triethylaluminum does not lead to severe chain transfer and does not inhibit the catalyst comprising the ligand-metal complex as describe above. This feature allows to use triethyl aluminum instead of triisobutylaluminum, which is a great cost benefit.

### Optional chain transfer agent

Optional chain transfer agent is selected from the group: dihydrogen or AIR¹⁰₃, BR¹⁰₃ or ZnR¹⁰₂, where each R¹⁰ is independently selected from hydrogen or C1-C10 hydrocarbyl.

The use of such catalyst system, in combination with the ratio of commoners, as well as polymerization conditions, such as temperature and pressure, and/or the present of a chain transfer agent, will allow the skilled man in the art to tune the properties of the polymer to obtain the polar group-containing olefin polymer according to the invention in order to meet the requirement cited above:
- Number average molecular weight (*M*ₙ),
- Crystallinity (*X*_{c}),
- Enthalpy (Δ*H*),
- Polydispersity index (*Ð*),
- Melting temperature (*T*ₘ),

### Examples

The following examples are not limiting examples and have been realized with the following monomers: ethylene (C₂), propylene (C₃), 1-hexene (C₆), 1-octene (Cs) and 5-hexen-1-ol (C₆OH). However, other monomer could be use in order to achieve the present invention.

Synthesis of propylene copolymer, poly(propylene-co-1-hexene) (poly(C₃-*co*-C₆)).

Synthesis of hydroxyl-functionalized propylene terpolymer, poly(propylene-co-1-hexene-co-5-hexen-1-ol) (poly(C₃-*co*-C₆-*co*-C₆OH)). The polymerization experiment was carried out using a stainless steel BÜCHI reactor (2 L) filled with pentamethylheptane (PMH) solvent (1 L) using a stirring speed of 600 rpm. Catalyst and comonomer solutions were prepared in a glove box under an inert dry nitrogen atmosphere. The reactor was first heated to 40 °C followed by the addition of TiBA (1.0 M solution in toluene, 2 mL), 1-hexene (neat 10 mL, 80 mmol), and triethylaluminum (TEA)-pacified 5-hexen-1-ol (1.0 M solution in toluene, TEA:5-hexen-1-ol (mol ratio) = 1, 10 mL, 10 mmol). The reactor was charged at 40 °C with gaseous propylene (100 g, 2.38 mol) and the reactor was heated up to the desired polymerization temperature of 130 °C resulting in a partial propylene pressure of about 15 bar. Once the set temperature was reached, the polymerization reaction was initiated by the injection of the pre-activated catalyst precursor bis((2-oxoyl-3-(dibenzo-1H-pyrrole-1-yl)-5-(methyl)phenyl)-2-phenoxy)-2,4-pentanediylhafnium (IV) dimethyl [CAS 958665-18-4] (Hf-O4, 2 µmol) in MAO (30 wt % solution in toluene, 11.2 mmol). The reaction was stopped by pouring the polymer solution into a container flask containing demineralized water/iPrOH (50 wt%, 1 L) and Irganox 1010 (1.0 M, 2 mmol). The resulting suspension was filtered and dried at 80 °C in a vacuum oven, prior the addition of Irganox 1010 as an antioxidant. Yield of poly(propylene-co-1-hexene-co-5-hexen-1-ol) was 25.6 g.

Purification protocol of hydroxyl-functionalized propylene terpolymer, poly(C₃-*co*-C₆-*co-*C₆OH).

Siloxide-functionalization protocol to obtain poly(C₃-*co*-C₆-*co*-C₆OSiMe₃). The reaction was carried out under a nitrogen atmosphere using standard Schlenk techniques. Reagent grade commercial chemicals were used as received. Deashed and degassed poly(C₃-*co*-C₆-*co*-C₆OH) (0.5 %mol OH; *M*ₙ = 32.0 kg·mol⁻¹; 3.2·10⁻⁴ mol,10.2 g) was dissolved in 300 mL of toluene at 60°C. The mixture was stirred until a transparent solution was obtained. Solutions of ClSiMe₃ (274 mg, 2.5·10⁻³ mol) and NEt₃ (511 mg, 5.0·10⁻³ mol) were prepared in air- and moisture-free environment and transferred to the polymer solution via sealed rubber septum at 40°C. The reaction mixture was allowed to stir for approximately 10 minutes and then 4-dimethylaminopyridine (DMAP) (8.2 mg, 0.7 ·10⁻⁴ mol) was added. After this step, the solution became opaque and was left stirring at 40°C overnight. Then the mixture was precipitated into cold methanol (yield 90 %, EX1, Table 2).

Direct synthesis of siloxy-functionalized propylene terpolymer, poly(C₃-*co*-C₆-*co-*C₆OSiMe₃).*rac*-Me₂Si(2-Me-4-Ph-Ind)₂ZrCl₂ (9 mg, 15 µmol) in MAO (30 wt % solution in toluene, 45 mmol). The reaction was stopped by pouring the polymer solution into a 20 L stainless steel vessel containing acidified isopropanol (2.5 % v/v HCl, 3 L) and Irganox 1010 (1.0 M, 5 mmol). The resulting suspension was stirred for 4 h, filtered, washed with demineralized water/iPrOH (50 wt%, 2 × 2 L) and dried at 80 °C in a vacuum oven, prior the addition of Irganox 1010 as antioxidant.

Direct synthesis of siloxy-functionalized propylene terpolymer, poly(C₃-*co*-C₆-*co-*C₆OSiMe₂tBu).*co*-C6-*co*-C6OSiMe₃) was applied to produce poly(C₃-*co*-C₆-*co*-C₆OSiMe₂tBu) (EX3, Table 2) and poly(C₃-*co*-C₈-*co*-C₆OSiMe₂tBu) (EX4, Table 2) using *rac*-Me₂Si(2-Me-4-Ph-Ind)₂ZrCl₂ (6 mg, 10 µmol), which was injected after the injection of TiBA scavenger (1.0 M solution in toluene, 20 mL), neat 1-hexene (300 mL, 2.4 mol) or neat 1-octene (200 mL, 1.3 mol), and neat *tert*-butyl(hex-5-en-1-yloxy)dimethylsilane (42.9 g, 200 mmol).

Direct synthesis of siloxy-functionalized propylene terpolymer, poly(C₃-*co*-C₂-*co-*C₆OSiMe₂tBu).*tert-*butyl(hex-5-en-1-yloxy)dimethylsilane (4.3 g, 20 mmol). The reactor was saturated at 40 °C with gaseous propylene/ethylene mixture (weight ratio = 90/10) and was heated up to the desired polymerization temperature of 80 °C resulting in a total pressure of 9 bar. Once the set temperature was reached, the reaction was initiated by the injection of the pre-activated catalyst precursor *rac*-Me₂Si(2-Me-4-Ph-Ind)₂ZrCl₂ (0.7 mg, 1 µmol) in MAO (30 wt % solution in toluene, 4.5 mmol). The pressure was kept constant at 9 bar with continuous feed of gaseous propylene/ethylene mixture (weight ratio = 90/10). The reaction was stopped by pouring the polymer solution into an Erlenmeyer flask containing acidified isopropanol (2.5 % v/v HCl, 500 mL) and Irganox 1010 (1.0 M, 0.5 mmol). The resulting suspension was stirred for 4 h, filtered, washed with demineralized water/iPrOH (50 wt%, 2 × 500 mL) and dried at 80 °C in a vacuum oven, prior the addition of Irganox 1010 as antioxidant.

**Table 1. Characteristics of the comparative poly(C₃-co-C₆) and poly(C₃-co-C₆-co-C₆OH) polymers produced according to the abovementioned protocols.**

| EX | Composition | C₃:C₆: C₆OH | *X*_{c} % | *M*ₙ kg·mol⁻¹ | *Ð* | *T*ₘ °C | ΔH J·g⁻¹ |
|---|---|---|---|---|---|---|---|
| CEX1 | poly(C₃-*co*-C₆) | 91.9:8.1:0 | 12.3 | 25.7 | 3.1 | 85.9 | 25.5 |

| | | | | | | | |
|---|---|---|---|---|---|---|---|
| *mol% with a standard deviation = 0.1 mol% | | | | | | | |

**Table 2. Characteristics of copolymer and terpolymers according to the invention with different composition produced according to the abovementioned protocols.**

| EX | Composition | (1):(2):(3) (mol%)* | *X_{c}* % | *M*ₙ kg·mol⁻¹ | *Ð* | *T*ₘ °C | Δ*H* J·g⁻¹ |
|---|---|---|---|---|---|---|---|
| EX1 | poly(C₃-*co*-C₆-*co*-C₆OSiMe₃) | 90.4:9.1:0.5: | 11.1 | 36.1 | 4.4 | 82.1 | 21.4 |
| EX2 | poly(C₃-*co*-C₆-*co*-C₆OSiMe₃) | 92.6:7:0.4 | 12.0 | 44.3 | 4.4 | 88 | 24.8 |
| EX3 | poly(C₃-*co*-C₆-*co*-C₆OSiMe₂tBu) | 90.8:8.9:0.3 | 10.8 | 37.2 | 4.1 | 83 | 22.4 |
| EX4 | poly(C₃-*co*-C₈-*co*-C₆OSiMe₂tBu) | 93.6:6:0.4 | 13.2 | 39.3 | 4.3 | 79 | 27.3 |
| EX5 | poly(C₃-*co*-C₂-*co*-C₆OSiMe₂tBu) | 82.5:17:0.5 | 1.0 | 51.2 | 4.5 | 89 | 2.0 |

| | | | | | | | |
|---|---|---|---|---|---|---|---|
| *mol% with a standard deviation = 0.1 mol% | | | | | | | |

**Table 3. Lap shear test results of terpolymers with different composition produced according to the abovementioned protocols.**

| EX | Lap Shear Strength [MPa] | | | | |
|---|---|---|---|---|---|
| | STEEL / PP | ALUMINUM / ALUMINUM | STEEL / STEEL | ALUMINUM / PP | PP/PP |
| EX1 | 3.3 ± 0.9 | 7.2 ± 0.3 | 6.8 ± 0.2 | 2.8 ± 0.2 | 3.8 ± 0.5 |
| EX2 | 3.2 ± 0.7 | 6.7 ± 0.5 | 6.6 ± 0.3 | 3.1 ± 0.5 | 4.1 ± 0.2 |
| EX3 | 3.1 ± 0.5 | 6.9 ± 0.4 | 6.2 ± 0.5 | 1.2 ± 0.3 | 3.0 ± 0.5 |
| EX4 | 3.0 ± 0.8 | 6.2 ± 0.8 | 5.7 ± 0.7 | 1.0 ± 0.3 | 3.1 ± 0.6 |
| EX5 | 3.0 ± 0.3 | 5.0 ± 0.4 | 4.6 ± 0.8 | 1.1 ± 0.4 | 3.1 ± 0.6 |
| CEX1 | 0.5 ± 0.3 | 0.8 ± 0.3 | 2.7 ± 0.5 | 0.4 ± 0.2 | 5.1 ± 0.3 |

The hot melt adhesive according to the invention is having at least one, preferably two, more preferably three, more preferably four, more preferably all of the following binding properties, which have been measured by the method described in the section "Lap Shear Strength" of the Measurement methods section wherein the measurements were performed with a Zwick type Z020 tensile tester equipped with a 10 kN load cell. Before measurements, samples were conditioned for 7 days at room temperature. The tests were performed on specimens (10 cm × 2.5 cm) with surface overlapping 12.5 mm. A grip-to-grip separation of 140 mm was used. The samples were pre-stressed to 3 N, then loaded with a constant cross-head speed 100 mm·min⁻¹. To calculate the lap shear strength the reported force value divided by the bonding surface (25 mm × 12.5 mm) of the specimens; the reported values are an average of at least 5 measurements of each composition:
- Steel to steel with a Lap Shear Strength above 3 MPa, preferably above 4.5 MPa, more preferably above 5 MPa, even more preferably above 6 MPa,
- Aluminum to aluminum with a Lap Shear Strength above 3 MPa, preferably above 4.5 MPa, more preferably above 5 MPa, even more preferably above 6 MPa,
- Steel to polyolefin with a Lap Shear Strength above 3 MPa,
- Aluminum to polyolefin with a Lap Shear Strength above 1 MPa, preferably above 2.5 MPa, more preferably 3 MPa,
- Polyolefin to polyolefin with a Lap Shear Strength above 3 MPa.

### Measurements.

### Size exclusion chromatography (SEC).

SEC measurements were performed at 150 °C on a Polymer Char GPC-IR^{®} built around an Agilent GC oven model 7890, equipped with an auto-sampler and the Integrated Detector IR4. 1, 2-Dichlorobenzene (o-DCB) was used as an eluent at a flow rate of 1 mL/min. The data were processed using Calculations Software GPC One^{®}. The molecular weights (*M*ₙ, *M*_{w}) and polydispersities (*Ð*) were calculated with respect to polyethylene or polystyrene standards.

### Liquid-state ¹H NMR.

¹H NMR and 13C NMR spectra were recorded at room temperature or at 80 °C using a Varian Mercury Vx spectrometer operating at Larmor frequencies of 400 MHz and 100.62 MHz for ¹H and ¹³C, respectively. For ¹H NMR experiments, the spectral width was 6402.0 Hz, acquisition time 1.998 s and the number of recorded scans equal to 64. ¹³C NMR spectra were recorded with a spectral width of 24154.6 Hz, an acquisition time of 1.3 s, and 256 scans.

The percentage of functionalization was determined by 1H NMR analysis carried out at 130 °C using deuterated tetrachloroethane (TCE-D2) as solvent and recorded in 5 mm tubes on a Varian Mercury spectrometer operating at a frequency of 400 MHz.

### Differential scanning calorimetry (DSC).

Melting (*T*ₘ) temperatures as well as enthalpies of the melting point (Δ*H* [J·g⁻¹]) of the transitions were measured using a Differential Scanning Calorimeter Q100 from TA Instruments. The measurements were carried out at a heating and cooling rate of 10 °C·min⁻¹ from -50 °C to 240 °C. The transitions were deducted from the second heating and cooling curves.

The DSC has been used for the determination of the Crystallinity (*X*_{c}) content by comparing the enthalpies of melting transition of the sample with melting transition of the 100 % crystalline polypropylene.

### Compression-molding experiments.

The film samples, used for the lap shear test, were prepared via compression-molding using PP ISO settings on LabEcon 600 high-temperature press (Fontijne Presses, the Netherlands). Namely, the films (25 mm × 12.5 mm × 0.5 mm) of functionalized polyolefins were loaded between the substrates: PP-PP, Steel-Steel, Aluminum-Aluminum or their combination with overlap surface 12.5 mm. Then, the compression-molding cycle was applied: heating to 130 °C, stabilizing for 3 min with no force applied, 5 min with 100 kN (0.63 MPa) normal force and cooling down to 40 °C with 10 °C·min⁻¹ and 100 kN (0.63 MPa) normal force.

### Lap Shear Strength.

The measurements were performed with a Zwick type Z020 tensile tester equipped with a 10 kN load cell. Before measurements, samples were conditioned for 7 days at room temperature. The tests were performed on specimens (10 cm × 2.5 cm) with surface overlapping 12.5 mm. A grip-to-grip separation of 140 mm was used. The samples were pre-stressed to 3 N, then loaded with a constant cross-head speed 100 mm·min⁻¹. To calculate the lap shear strength the reported force value divided by the bonding surface (25 mm × 12.5 mm) of the specimens. The reported values are an average of at least 5 measurements of each composition.

## Claims

1. Hot melt adhesive comprising a polar group-containing olefin polymer which is having:
• at least 80 mol% of a constituent unit represented by the following formula (1),
• optionally a constituent unit represented by the following formula (2), and
• between 0.1 to 1 mol%, preferably 0.1 to 0.5 mol%, of a constituent unit represented by the following formula (3): 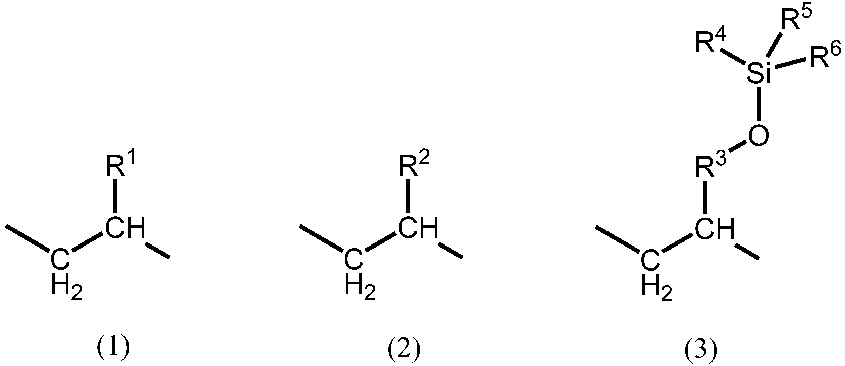 Wherein:
• R¹ is H or CH₃.
• R² is selected from the list comprising: hydrocarbyl group having 0 to 10 carbon atoms, preferentially 1 to 6 and more preferentially 1 or 6 when R¹ = H, and preferably 0, 2, 4 or 6 when R¹ = CH₃,
• R³ is either selected from the list comprising: hydrocarbyl group having 1 to 10 carbon atoms, preferentially 2 to 8, preferentially 4 to 8, more preferentially 4 or 6,
• R4, R5, R6 can be identical or different and selected from the list comprising a hydrocarbyl group having 1 to 10 carbon atoms, preferentially 1 to 6 and more preferentially 1 to 4 carbon atoms or a combination of 1 and/or 3 and/or 4 carbon atoms.

2. Hot melt adhesive according to claim 1, wherein polar group-containing olefin polymer is having at least one of the followings, preferably two, more preferably four, more preferably three, more preferably all of the following:
• Number average molecular weight (*M*ₙ) between 5 to 50 kg/mol, preferably 10 to 50 kg/mol, preferably between 20 to 50 kg/mol, measured by the method described in the section "Size exclusion chromatography (SEC)" of the Measurement methods section of the present disclosure,
• Crystallinity (*X*_{c}) content below 30%, preferably below 15%, more preferably below 10%, measured by the method described in the section "Differential scanning calorimetry (DSC)" of the Measurement methods section of the present disclosure,
• Enthalpy (Δ*H*) between 5 to 65 J/g, preferably 5 to 30 J/g, measured by the method described in the section "Differential scanning calorimetry (DSC)" of the Measurement methods section of the present disclosure,
• Polydispersity index (*Ð*) from 2 to 6, preferably between 3 to 6, more preferably between 4 to 6, measured by the method described in the section "Size exclusion chromatography (SEC)" of the Measurement methods section of the present disclosure,
• Melting temperature (*T*ₘ) between 40 and 120 °C, measured by the method described in the section "Differential scanning calorimetry (DSC)" of the Measurement methods section of the present disclosure.

3. Hot melt adhesive according to claim 1 or 2, wherein the constituent unit represented by the following formula (3) is the polymerization unit from one of the following monomers selected from the group comprising (allyloxy)trimethylsilane, (allyloxy)triethylsilane, (allyloxy)triisopropylsilane, *tert*-butyl(allyloxy)dimethylsilane, (allyloxy)dimethylphenylsilane, (but-3-en-1-yloxy)trimethylsilane, (but-3-en-1-yloxy)triethylsilane, (but-3-en-1-yloxy)triisopropylsilane, *tert*-butyl(but-3-en-1-yloxy)dimethylsilane, (but-3-en-1-yloxy)dimethylphenylsilane, (hex-5-en-1-yloxy)trimethylsilane, (hex-5-en-1-yloxy)triethylsilane, (hex-5-en-1-yloxy)triisopropylsilane, *tert*-butyl(hex-5-en-1-yloxy)dimethylsilane, (hex-5-en-1-yloxy)dimethylphenylsilane, trimethyl(undec-10-en-1-yloxy)silane, triethyl(undec-10-en-1-yloxy)silane, triisopropyl(undec-10-en-1-yloxy)silane, *tert*-butyldimethyl(undec-10-en-1-yloxy)silane, dimethylphenyl(undec-10-en-1-yloxy)silane, preferably (hex-5-en-1-yloxy)trimethylsilane, *tert*-butyl(hex-5-en-1-yloxy)dimethylsilane.

4. Hot melt adhesive according to one of the preceding claims, wherein the polymerization of the polar group-containing olefin polymer has been performed using a solution process.

5. Hot melt adhesive to one of the preceding claims, wherein a siloxide-functionalized C₃ to C₁₂ monomer, preferably C₄ to C₁₀, preferably C₆ to C₁₀, preferably C₆ to C₈ olefin monomer has been used during the polymerization.

6. Hot melt adhesive according to one of the preceding claims, wherein the hot melt adhesive resin is produced by treatment of a corresponding hydroxyl-functionalized co- or terpolymer with a silylation agent, wherein the hydroxyl-functionalized co- or terpolymer has been previously produced by the solution polymerization of one or more olefin monomer and a hydroxyl-functionalized olefin monomer, which was prior protected with an aluminum trialkyl.

7. Hot melt adhesive according to one of the preceding claims, wherein it is having at least one preferably two, more preferably three, more preferably four, more preferably all of the following binding properties, which have been measured by the method described in the section "Lap Shear Strength" of the Measurement methods section wherein the measurements were performed with a Zwick type Z020 tensile tester equipped with a 10 kN load cell. Before measurements, samples were conditioned for 7 days at room temperature. The tests were performed on specimens (10 cm × 2.5 cm) with surface overlapping 12.5 mm. A grip-to-grip separation of 140 mm was used. The samples were pre-stressed to 3 N, then loaded with a constant cross-head speed 100 mm·min⁻¹. To calculate the lap shear strength the reported force value divided by the bonding surface (25 mm × 12.5 mm) of the specimens; the reported values are an average of at least 5 measurements of each composition:
• Steel to steel with a Lap Shear Strength above 3 MPa, preferably above 4.5 MPa, more preferably above 5 MPa, even more preferably above 6 MPa,
• Aluminum to aluminum with a Lap Shear Strength above 3 MPa, preferably above 4.5 MPa, more preferably above 5 MPa, even more preferably above 6 MPa,
• Steel to polyolefin with a Lap Shear Strength above 3 MPa,
• Aluminum to polyolefin with a Lap Shear Strength above 1 MPa, preferably above 2.5 MPa, more preferably 3 MPa,
• Polyolefin to polyolefin with a Lap Shear Strength above 3 MPa.

8. Hot melt adhesive according to one of the preceding claims further comprises
a. Polymer part, between 16-100 wt%, preferably 30-50 wt% of the hot melt adhesive,
b. Tackifiers, between 0-70 wt%, preferably 20-40wt%, of the hot melt adhesive,
c. Plasticizers, such as processing oils and waxes, between 0-40 wt%, preferably 10-40wt% of the hot melt adhesive,
d. Filler, between 0-10 wt% of the hot melt adhesive,
e. Antioxidants, between 0-3 wt% of the hot melt adhesive,
f. Pigment, between 0-1 wt% of the hot melt adhesive,
wherein the hot melt adhesive further comprise the polar group-containing olefin polymer according to the invention, and the polar group-containing olefin polymer is at least a part of the Polymer part, more preferably it is 100% of the Polymer part, the remaining part of the Polymer part, if present, is another polymer, preferably an olefin polymer.

9. Polar group-containing olefin polymer according to the following formula (4) 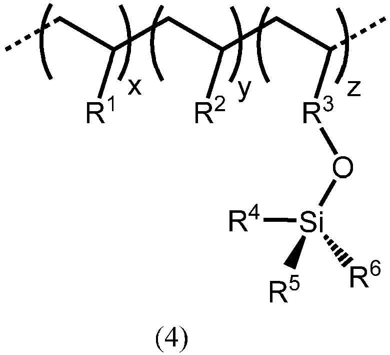 wherein
• z is 0.1 to 1 mol%,
• x is at least 80 mol%,
• y is 0 or 100-(x+z) mol%,
• R¹ is H or CH₃,
• R² is selected from the list comprising: hydrocarbyl group having 0 to 10 carbon atoms, preferentially 1 to 6 and more preferentially 1 or 6 when R¹ = H, and preferably 0, 2, 4 or 6 when R¹ = CH₃,
• R³ is a hydrocarbyl group having 1 to 10 carbon atoms, preferentially 2 to 8, preferentially 4 to 8, more preferentially 4 or 6,
• R⁴, R⁵, R⁶ are identical or different and selected from the list comprising a hydrocarbyl group having 1 to 10 carbon atoms, preferentially 1 to 6 and more preferentially 1 to 4 carbon atoms or a combination of 1 and/or 3 and/or 4 carbon atoms.

10. Polar group-containing olefin polymer according the preceding claim, wherein the polymerization of the polar group-containing olefin polymer has been performed using a solution process, with preferably a catalyst system comprising a the metal catalyst or catalyst precursor comprising a metal from Group 3-8, more preferably from Group 3-6 and/or wherein the metal catalyst comprises a metal selected from the group consisting of Ti, Zr, Hf, V, Cr, Fe, Co, Ni, Pd, preferably Zr or Hf, preferably a homogeneous single site catalyst, more preferably a hafnium complex of a polyvalent aryloxyether or a zirconium complex of a polyvalent aryloxyether.

11. Polar group-containing olefin polymer according one of the preceding claims, wherein it is having at least one of the followings, preferably two, more preferably three, more preferably four, more preferably all of the followings:
• Number average molecular weight (*M*ₙ) between 5 to 50 kg/mol, preferably 10 to 50 kg/mol, preferably between 20 to 50 kg/mol, measured by the method described in the section "Size exclusion chromatography (SEC)" of the Measurement methods section of the present disclosure,
• Crystallinity (*X*_{c}) content below 30%, preferably below 15%, more preferably below 10%, measured by the method described in the section "Differential scanning calorimetry (DSC)" of the Measurement methods section of the present disclosure,
• Enthalpy (Δ*H*) between 5 to 65 J/g, preferably 5 to 30 J/g, measured by the method described in the section "Differential scanning calorimetry (DSC)" of the Measurement methods section of the present disclosure,
• Polydispersity index (*Ð*) from 2 to 6, preferably between 3 to 6, more preferably between 4 to 6, measured by the method described in the section "Size exclusion chromatography (SEC)" of the Measurement methods section of the present disclosure,
• Melting temperature (*T*ₘ) between 40 and 120 °C, measured by the method described in the section "Differential scanning calorimetry (DSC)" of the Measurement methods section of the present disclosure.

12. Use of the polar group-containing olefin polymer according to one of the preceding claims, for the fabrication of an hot melt adhesive, photovoltaic encapsulants, bitumen binders, surface modifiers for polyolefin preferably for automotive and household appliances and compatibilizer.

13. Use of hot melt adhesive according to one of the preceding claims in order to glue together metals, glass, stone, wood, polar polymers or metals to glass, metals to stone, metals to wood, metal to polar polymers, glass to stone, glass to wood, glass to polar polymers, stone to wood, stone to polar polymers, wood to polar polymers, metals to polyolefins, glass to polyolefins, stone to polyolefins, wood to polyolefins or polar polymers to polyolefins, wherein stone are being as mineral material such as for example, granite, basalt, limestone, or artificial stone such as concrete or brick stone.

## Patentansprüche

1. Heißschmelzklebstoff, umfassend eine polare Gruppe enthaltendes Olefinpolymer, das aufweist:
- mindestens 80 Mol-% einer Bestandteileinheit, die durch die folgende Formel (1) dargestellt wird,
- optional eine Bestandteileinheit, die durch die folgende Formel (2) dargestellt wird, und
- zwischen 0,1 und 1 Mol-%, bevorzugt 0,1 bis 0,5 Mol-%, einer Bestandteileinheit, die durch die folgende Formel (3) dargestellt wird: 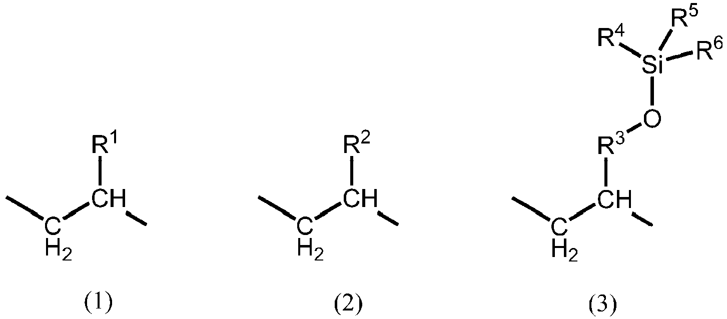 Wobei:
- R¹ H oder CH₃ ist,
- R² aus der Liste ausgewählt wird, umfassend: Kohlenwasserstoffgruppe, die 0 bis 10, bevorzugt 1 bis 6 und bevorzugter 1 oder 6 Kohlenstoffatome aufweist, wenn R¹ = H, und bevorzugt 0, 2, 4 oder 6, wenn R¹ = CH₃,
- R³ entweder aus der Liste ausgewählt wird, umfassend: Kohlenwasserstoffgruppe, die 1 bis 10, bevorzugt 2 bis 8, bevorzugt 4 bis 8, bevorzugter 4 oder 6 Kohlenstoffatome aufweist,
- R4, R5, R6 identisch oder verschieden sein können und aus der Liste ausgewählt werden, die eine Kohlenwasserstoffgruppe umfasst, die 1 bis 10 Kohlenstoffatome, bevorzugt 1 bis 6 und bevorzugter 1 bis 4 Kohlenstoffatome, oder eine Kombination von 1 und/oder 3 und/oder 4 Kohlenstoffatomen aufweist.

2. Heißschmelzklebstoff nach Anspruch 1, wobei das eine polare Gruppe enthaltende Olefinpolymer mindestens eine der folgenden, bevorzugt zwei, bevorzugter vier, bevorzugter drei, bevorzugter alles von Folgendem aufweist:
- Zahlenmittleres Molekulargewicht (Mn) zwischen 5 und 50 kg/mol, bevorzugt 10 bis 50 kg/mol, bevorzugt zwischen 20 und 50 kg/mol, mit dem im Abschnitt "Größenausschlusschromatographie (SEC)" des Messverfahrenabschnitts der vorliegenden Offenbarung beschriebenen Verfahren gemessen,
- Kristallinität (*X_{c}*) Gehalt unter 30%, bevorzugt unter 15%, bevorzugter unter 10%, mit dem im Abschnitt "Differenzkalorimetrie (DSC)" des Messverfahrenabschnitts der vorliegenden Offenbarung beschriebenen Verfahren gemessen,
- Enthalpie (ΔH) zwischen 5 und 65 J/g, bevorzugt 5 bis 30 J/g, mit dem im Abschnitt "Differenzkalorimetrie (DSC)" des Messverfahrenabschnitts der vorliegenden Offenbarung beschriebenen Verfahren gemessen,
- Polydispersitätsindex (*Ð*) von 2 bis 6, bevorzugt zwischen 3 und 6, bevorzugter zwischen 4 und 6, mit dem im Abschnitt "Größenausschlusschromatographie (SEC)" des Messverfahrenabschnitts der vorliegenden Offenbarung beschriebenen Verfahren gemessen,
- Schmelztemperatur (*Tₘ*) zwischen 40 und 120 °C, mit dem im Abschnitt "Differenzkalorimetrie (DSC)" des Messverfahrenabschnitts der vorliegenden Offenbarung beschriebenen Verfahren gemessen.

3. Heißschmelzklebstoff nach Anspruch 1 oder 2, wobei die durch die folgende Formel (3) dargestellte Bestandteileinheit die Polymerisationseinheit eines der folgenden Monomere ist, ausgewählt aus der Gruppe, die (Allyloxy)trimethylsilan, (Allyloxy)triethylsilan, (Allyloxy)triisopropylsilan, *tert-*Butyl(allyloxy)dimethylsilan, (Allyloxy)dimethylphenylsilan, (But-3-en-1-yloxy)trimethylsilan, (But-3-en-1-yloxy)triethylsilan, (But-3-en-1-yloxy)triisopropylsilan, *tert*-Butyl(but-3-en-1-yloxy)dimethylsilan, (But-3-en-1-yloxy)dimethylphenylsilan, (Hex-5-en-1-yloxy)trimethylsilan, (Hex-5-en-1-yloxy)triethylsilan, (Hex-5-en-1-yloxy)triisopropylsilan, *tert*-Butyl(hex-5-en-1-yloxy)dimethylsilan, (hex-5-en-1-yloxy)dimethylphenylsilan, Trimethyl(undec-10-en-1-yloxy)silan, Triethyl(undec-10-en-1-yloxy)silan, Triisopropyl(undec-10-en-1-yloxy)silan, *tert*-Butyldimethyl(undec-10-en-1-yloxy)silan, Dimethylphenyl(undec-10-en-1-yloxy)silan, bevorzugt (hex-5-en-1-yloxy)trimethylsilan, *tert*-Butyl(hex-5-en-1-yloxy)dimethylsilan umfasst.

4. Heißschmelzklebstoff nach einem der vorstehenden Ansprüche, wobei die Polymerisation des eine polare Gruppe enthaltenden Olefinpolymers unter Verwendung eines Lösungsprozesses durchgeführt worden ist.

5. Heißschmelzklebstoff nach einem der vorstehenden Ansprüche, wobei während der Polymerisation ein siloxidfunktionalisiertes C₃ bis C₁₂ Monomer, bevorzugt C₄ bis C₁₀, bevorzugt C₆ bis C₁₀, bevorzugt C₆ bis C₈ Olefinmonomer verwendet worden ist.

6. Heißschmelzklebstoff nach einem der vorstehenden Ansprüche, wobei das Heißschmelzklebstoffharz durch Behandlung eines entsprechenden hydroxylfunktionalisierten Co- oder Terpolymers mit einem Silylierungsmittel hergestellt wird, wobei das hydroxylfunktionalisierte Co- oder Terpolymer zuvor durch Lösungspolymerisation eines oder mehrerer Olefinmonomere und eines hydroxylfunktionalisierten Olefinmonomers hergestellt wurde, das zuvor mit einem Aluminiumtrialkyl geschützt worden ist.

7. Heißschmelzklebstoff nach einem der vorstehenden Ansprüche, wobei er mindestens eine, bevorzugt zwei, bevorzugter drei, bevorzugter vier, bevorzugter alle der folgenden Bindungseigenschaften aufweist, die mit dem im Abschnitt "Zugscherfestigkeit" des Messverfahrenabschnitts beschriebenen Verfahren gemessen worden sind, wobei die Messungen mit einer Zwick-Zugprüfmaschine vom Typ Z020 durchgeführt worden sind, die mit einer 10 kN-Kraftmessdose ausgestattet war. Vor den Messungen wurden die Proben 7 Tage lang bei Raumtemperatur konditioniert. Die Tests wurden an Proben (10 cm x 2,5 cm) mit einer Oberflächenüberlappung von 12,5 mm durchgeführt. Es wurde eine Einspannlänge von 140 mm verwendet. Die Proben wurden mit 3 N vorgespannt und danach mit einer konstanten Traversengeschwindigkeit von 100 mm min⁻¹belastet. Zur Berechnung der Zugscherfestigkeit wird der angegebene Kraftwert durch die Bindungsoberfläche (25 mm x 12,5 mm) der Proben geteilt; die angegebenen Werte sind ein Durchschnitt von mindestens 5 Messungen jeder Zusammensetzung:
- Stahl auf Stahl mit einer Zugscherfestigkeit von über 3 MPa, bevorzugt über 4,5 MPa, bevorzugter über 5 MPa, besonders bevorzugt über 6 MPa,
- Aluminium auf Aluminium mit einer Zugscherfestigkeit von über 3 MPa, bevorzugt über 4,5 MPa, bevorzugter über 5 MPa, besonders bevorzugt über 6 MPa,
- Stahl an Polyolefin mit einer Zugscherfestigkeit über 3 MPa,
- Aluminium an Polyolefin mit einer Zugscherfestigkeit von über 1 MPa, bevorzugt über 2,5 MPa, bevorzugter 3 MPa,
- Polyolefin an Polyolefin mit einer Zugscherfestigkeit über 3 MPa.

8. Heißschmelzklebstoff nach einem der vorstehenden Ansprüche, weiter umfassend
a) Polymerteil, zwischen 16-100 Gew.-%, bevorzugt 30-50 Gew.-% des Heißschmelzklebstoffs,
b) Klebrigmacher, zwischen 0 und 70 Gew.-%, bevorzugt 20-40 Gew.-%, des Heißschmelzklebstoffs,
c) Weichmacher, wie z. B. Prozessöle und Wachse, zwischen 0 und 40 Gew.-%, bevorzugt 10- 40 Gew.-% des Heißschmelzklebstoffs,
d) Füllstoff, zwischen 0-10 Gew.-% des Heißschmelzklebstoffs,
e) Antioxidantien, zwischen 0-3 Gew.-% des Heißschmelzklebstoffs,
f) Pigment, zwischen 0-1 Gew.-% des Heißschmelzklebstoffs,
wobei der Heißschmelzklebstoff weiter das eine polare Gruppe enthaltende Olefinpolymer gemäß der Erfindung umfasst und das eine polare Gruppe enthaltende Olefinpolymer mindestens ein Teil des Polymerteils, bevorzugter 100% des Polymerteils ist, der verbleibende Teil des Polymerteils, falls vorhanden, ein anderes Polymer, bevorzugt ein Olefinpolymer, ist.

9. Polare Gruppe enthaltendes Olefinpolymer gemäß der folgenden Formel (4) 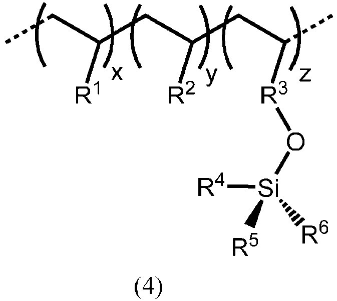 wobei
- z 0,1 bis 1 Mol-% ist,
- x mindestens 80 Mol-% ist,
- y 0 oder 100-(x+z) Mol-% ist,
- R¹ H oder CH₃ ist,
- R² aus der Liste ausgewählt wird, umfassend: Kohlenwasserstoffgruppe, die 0 bis 10, bevorzugt 1 bis 6 und bevorzugter 1 oder 6 Kohlenstoffatome aufweist, wenn R¹ = H, und bevorzugt 0, 2, 4 oder 6, wenn R¹ = CH₃,
- R³ eine Kohlenwasserstoffgruppe ist, die 1 bis 10, bevorzugt 2 bis 8, bevorzugt 4 bis 8, bevorzugter 4 oder 6 Kohlenstoffatome aufweist,
- R⁴, R⁵, R⁶ identisch oder verschieden sind und aus der Liste ausgewählt werden, die eine Kohlenwasserstoffgruppe umfasst, die 1 bis 10, bevorzugt 1 bis 6 und bevorzugter 1 bis 4 Kohlenstoffatome, oder eine Kombination von 1 und/oder 3 und/oder 4 Kohlenstoffatomen aufweist.

10. Polare Gruppe enthaltendes Olefinpolymer nach dem vorstehenden Anspruch, wobei die Polymerisation des eine polare Gruppe enthaltenden Olefinpolymers unter Verwendung eines Lösungsprozesses mit bevorzugt einem Katalysatorsystem durchgeführt worden ist, das bevorzugt einen Metallkatalysator oder eine Katalysatorvorstufe mit einem Metall aus Gruppe 3-8, bevorzugter der Gruppe 3-6, umfasst, und/oder wobei der Metallkatalysator ein Metall, ausgewählt aus der Gruppe bestehend aus Ti, Zr, Hf, V, Cr, Fe, Co, Ni, Pd, bevorzugt Zr oder Hf, bevorzugt ein homogener Einzelstellenkatalysator, bevorzugter einen Hafniumkomplex eines mehrwertigen Aryloxyethers oder einen Zirkoniumkomplex eines mehrwertigen Aryloxyethers umfasst.

11. Polare Gruppe enthaltendes Olefinpolymer nach einem der vorstehenden Ansprüche, wobei es mindestens eine der folgenden, bevorzugt zwei, bevorzugter drei, bevorzugter vier, bevorzugter alle von Folgendem aufweist:
- Zahlenmittleres Molekulargewicht (*M*ₙ) zwischen 5 und 50 kg/mol, bevorzugt 10 bis 50 kg/mol, bevorzugt zwischen 20 und 50 kg/mol, mit dem im Abschnitt "Größenausschlusschromatographie (SEC)" des Messverfahrenabschnitts der vorliegenden Offenbarung beschriebenen Verfahren gemessen,
- Kristallinität (*X_{c}*) Gehalt unter 30%, bevorzugt unter 15%, bevorzugter unter 10%, mit dem im Abschnitt "Differenzkalorimetrie (DSC)" des Messverfahrenabschnitts der vorliegenden Offenbarung beschriebenen Verfahren gemessen,
- Enthalpie (ΔH) zwischen 5 und 65 J/g, bevorzugt 5 bis 30 J/g, mit dem im Abschnitt "Differenzkalorimetrie (DSC)" des Messverfahrenabschnitts der vorliegenden Offenbarung beschriebenen Verfahren gemessen,
- Polydispersitätsindex (*Ð*) von 2 bis 6, bevorzugt zwischen 3 und 6, bevorzugter zwischen 4 und 6, mit dem im Abschnitt "Größenausschlusschromatographie (SEC)" des Messverfahrenabschnitts der vorliegenden Offenbarung beschriebenen Verfahren gemessen,
- Schmelztemperatur (*Tₘ*) zwischen 40 und 120 °C, mit dem im Abschnitt "Differenzkalorimetrie (DSC)" des Messverfahrenabschnitts der vorliegenden Offenbarung beschriebenen Verfahren gemessen.

12. Verwendung des eine polare Gruppe enthaltenden Olefinpolymers nach einem der vorstehenden Ansprüche zur Herstellung eines Heißschmelzklebstoffs, von Photovoltaik-Verkapselungen, Bitumenbindemitteln, Oberflächenmodifikatoren für Polyolefine, bevorzugt für Automobil- und Haushaltsgeräte, und eines Verträglichkeitsvermittlers.

13. Verwendung eines Heißschmelzklebstoffs nach einem der vorstehenden Ansprüche zum Verkleben von Metallen, Glas, Stein, Holz, polaren Polymeren oder Metallen mit Glas, Metallen mit Stein, Metallen mit Holz, Metallen mit polaren Polymeren, Glas mit Stein, Glas mit Holz, Glas mit polaren Polymeren, Steinen mit Holz, Steinen mit polaren Polymeren, Holz mit polaren Polymeren, Metallen mit Polyolefinen, Glas mit Polyolefinen, Steinen mit Polyolefinen, Holz mit Polyolefinen oder polaren Polymeren mit Polyolefinen, wobei Steine mineralischer Werkstoff sind, wie beispielsweise Granit, Basalt, Kalkstein oder künstlicher Stein, wie beispielsweise Beton oder Ziegelstein.

## Revendications

1. Adhésif thermofusible comprenant un polymère d'oléfine contenant un groupe polaire qui présente :
- au moins 80 % en moles d'une unité constitutive représentée par la formule (1) suivante,
- optionnellement une unité constitutive représentée par la formule (2) suivante, et
- entre 0,1 et 1 % en moles, de préférence de 0,1 à 0,5 % en moles, d'une unité constitutive représentée par la formule (3) suivante : 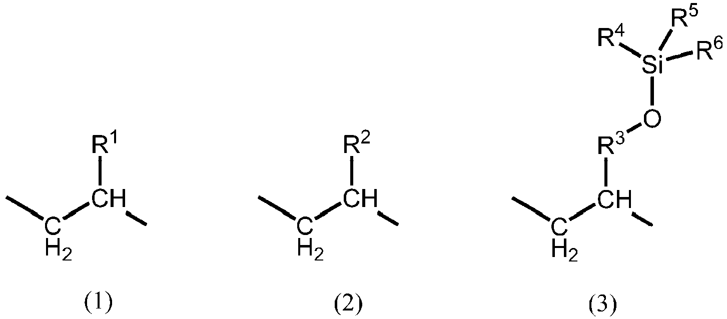 dans lesquelles :
- R¹ est H ou CH₃,
- R² est sélectionné dans la liste comprenant : un groupe hydrocarbyle présentant de 0 à 10 atomes de carbone, préférentiellement de 1 à 6 et plus préférentiellement 1 ou 6 lorsque R¹ = H, et de préférence 0, 2, 4 ou 6 lorsque R¹ = CH₃,
- R³ est sélectionné dans la liste comprenant : un groupe hydrocarbyle présentant de 1 à 10 atomes de carbone, préférentiellement de 2 à 8, préférentiellement de 4 à 8, plus préférentiellement 4 ou 6,
- R4, R5, R6 peuvent être identiques ou différents et sélectionnés dans la liste comprenant un groupe hydrocarbyle présentant de 1 à 10 atomes de carbone, préférentiellement de 1 à 6 et plus préférentiellement de 1 à 4 atomes de carbone, ou une combinaison de 1 et/ou 3 et/ou 4 atomes de carbone.

2. Adhésif thermofusible selon la revendication 1, dans lequel un polymère d'oléfine contenant un groupe polaire présente au moins un parmi ce qui suit, de préférence deux, plus préférentiellement quatre, plus préférentiellement trois, plus préférentiellement tout ce qui suit :
- Masse moléculaire moyenne en nombre (*M*ₙ) entre 5 et 50 kg/mol, de préférence de 10 à 50 kg/mol, de préférence entre 20 et 50 kg/mol, mesurée par le procédé décrit dans la section « Chromatographie d'exclusion sur gel (SEC) » de la section Procédés de mesure de la présente divulgation,
- Teneur en cristallinité (*X_{c}*) inférieure à 30 %, de préférence inférieure à 15 %, plus préférentiellement inférieure à 10 %, mesurée par le procédé décrit dans la section « Analyse calorimétrique différentielle (DSC) » de la section Procédés de mesure de la présente divulgation,
- Enthalpie (ΔH) entre 5 et 65 J/g, de préférence de 5 à 30 J/g, mesurée par le procédé décrit dans la section « Analyse calorimétrique différentielle (DSC) » de la section Procédés de mesure de la présente divulgation,
- Indice de polydispersité (D) de 2 à 6, de préférence entre 3 et 6, plus préférentiellement entre 4 et 6, mesuré par le procédé décrit dans la section « Chromatographie d'exclusion sur gel (SEC) » de la section Procédés de mesure de la présente divulgation,
- Température de fusion (*Tₘ*) entre 40 et 120 °C, mesurée par le procédé décrit dans la section « Analyse calorimétrique différentielle (DSC) » de la section Procédés de mesure de la présente divulgation.

3. Adhésif thermofusible selon la revendication 1 ou 2, dans lequel l'unité constitutive représentée par la formule (3) suivante est l'unité de polymérisation issue d'un des monomères suivants sélectionnés dans le groupe comprenant : (allyloxy)triméthylsilane, (allyloxy)triéthylsilane, (allyloxy)triisopropylsilane , *tert*-butyl(allyloxy)diméthylsilane, (allyloxy)diméthylphénylsilane, (but-3-én-1-yloxy)triméthylsilane, (but-3-én-1-yloxy)triéthylsilane, (but-3-én-1-yloxy)triisopropylsilane, *tert*-butyl(but-3-én-1-yloxy)diméthylsilane, (but-3-én-1-yloxy)diméthylphénylsilane, (hex-5-én-1-yloxy)triméthylsilane, (hex-5-én-1-yloxy)triéthylsilane, (hex-5-én-1-yloxy)triisopropylsilane, *tert*-butyl(hex-5-én-1-yloxy)diméthylsilane, (hex-5-én-1-yloxy)diméthylphénylsilane, triméthyl(undéc-10-én-1-yloxy)silane, triéthyl(undéc-10-én-1-yloxy)silane, triisopropyl(undéc-10-én-1-yloxy)silane, *tert*-butyldiméthyl(undéc-10-én-1-yloxy)silane, diméthylphényl(undéc-10-én-1-yloxy)silane, de préférence (hex-5-én-1-yloxy)triméthylsilane, *tert*-butyl(hex-5-én-1-yloxy)diméthylsilane.

4. Adhésif thermofusible selon l'une des revendications précédentes, dans lequel la polymérisation du polymère d'oléfine contenant un groupe polaire a été réalisée à l'aide d'un processus de dissolution.

5. Adhésif thermofusible selon l'une des revendications précédentes, dans lequel un monomère C₃ à C₁₂ fonctionnalisé par un siloxyde, de préférence un monomère d'oléfine C₄ à C₁₀, de préférence C₆ à C₁₀, de préférence C₆ à C₈, a été utilisé pendant la polymérisation.

6. Adhésif thermofusible selon l'une des revendications précédentes, dans lequel la résine adhésive thermofusible est produite par traitement d'un co- ou terpolymère fonctionnalisé par hydroxyle correspondant avec un agent de silylation, dans lequel le co- ou terpolymère fonctionnalisé par hydroxyle a été auparavant produit par la polymérisation en solution d'un ou plusieurs monomères d'oléfine et d'un monomère d'oléfine fonctionnalisé par hydroxyle, qui a été préalablement protégé par un trialkylaluminium.

7. Adhésif thermofusible selon l'une des revendications précédentes, dans lequel il présente au moins une, de préférence deux, plus préférentiellement trois, plus préférentiellement quatre, plus préférentiellement toutes les propriétés de liaison suivantes, qui ont été mesurées par le procédé décrit dans la section « Résistance au cisaillement par recouvrement » de la section Procédés de mesure, dans lequel les mesures ont été réalisées avec un testeur de traction Zwick de type Z020 équipé d'une cellule de charge de 10 kN. Avant les mesures, les échantillons ont été conditionnés pendant 7 jours à température ambiante. Les tests ont été réalisés sur des exemplaires (10 cm x 2,5 cm) avec un chevauchement de surface de 12,5 mm. Un écartement de 140 mm entre les poignées a été utilisé. Les échantillons ont été précontraints à 3 N, puis chargés à une vitesse de traverse constante de 100 mm min⁻¹. Pour calculer la résistance au cisaillement par recouvrement, la valeur de force transmise est divisée par la surface de liaison (25 mm x 12,5 mm) des exemplaires ; les valeurs transmises sont une moyenne d'au moins 5 mesures pour chaque composition :
- Acier sur acier avec une résistance au cisaillement par recouvrement supérieure à 3 MPa, de préférence supérieure à 4,5 MPa, plus préférentiellement supérieure à 5 MPa, encore plus préférentiellement supérieure à 6 MPa,
- Aluminium sur aluminium avec une résistance au cisaillement par recouvrement supérieure à 3 MPa, de préférence supérieure à 4,5 MPa, plus préférentiellement supérieure à 5 MPa, encore plus préférentiellement supérieure à 6 MPa,
- Acier sur polyoléfine avec une résistance au cisaillement par recouvrement supérieure à 3 MPa,
- Aluminium sur polyoléfine avec une résistance au cisaillement par recouvrement supérieure à 1 MPa, de préférence supérieure à 2,5 MPa, plus préférentiellement supérieure à 3 MPa,
- Polyoléfine sur polyoléfine avec une résistance au cisaillement par recouvrement supérieure à 3 MPa.

8. Adhésif thermofusible selon l'une des revendications précédentes comprenant en outre
a) Une partie polymère, entre 16 et 100 % en poids, de préférence 30 à 50 % en poids de l'adhésif thermofusible,
b) Des agents poisseux, entre 0 et 70 % en poids, de préférence 20 à 40 % en poids, de l'adhésif thermofusible,
c) Des plastifiants, tels que des huiles de traitement et des cires, entre 0 et 40 % en poids, de préférence 10 à 40 % en poids de l'adhésif thermofusible,
d) Une charge, entre 0 et 10 % en poids de l'adhésif thermofusible,
e) Des antioxydants, entre 0 et 3 % en poids de l'adhésif thermofusible,
f) Un pigment, entre 0 et 1 % en poids de l'adhésif thermofusible,
dans lequel l'adhésif thermofusible comprend en outre le polymère d'oléfine contenant un groupe polaire selon l'invention, et le polymère d'oléfine contenant un groupe polaire est au moins une partie de la partie polymère, plus préférentiellement 100 % de la partie polymère, la partie restante de la partie polymère, si elle est présente, est un autre polymère, de préférence un polymère d'oléfine.

9. Polymère d'oléfine contenant un groupe polaire selon la formule (4) suivante 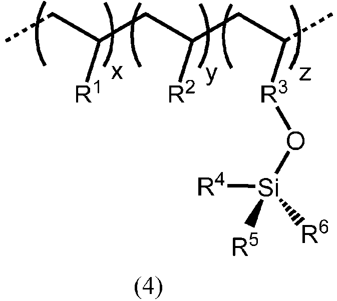 dans lequel
- z représente 0,1 à 1 % en moles,
- x représente au moins 80 % en moles,
- y représente 0 ou 100 - (x + z) % en moles,
- R¹ est H ou CH₃,
- R² est sélectionné dans la liste comprenant : un groupe hydrocarbyle présentant de 0 à 10 atomes de carbone, préférentiellement de 1 à 6 et plus préférentiellement 1 ou 6 lorsque R¹ = H, et de préférence 0, 2, 4 ou 6 lorsque R¹ = CH₃,
- R³ est un groupe hydrocarbyle présentant de 1 à 10 atomes de carbone, préférentiellement de 2 à 8, préférentiellement de 4 à 8, plus préférentiellement 4 ou 6,
- R⁴, R⁵, R⁶ sont identiques ou différents et sélectionnés dans la liste comprenant un groupe hydrocarbyle présentant de 1 à 10 atomes de carbone, préférentiellement de 1 à 6 et plus préférentiellement de 1 à 4 atomes de carbone, ou une combinaison de 1 et/ou 3 et/ou 4 atomes de carbone.

10. Polymère d'oléfine contenant un groupe polaire selon la revendication précédente, dans lequel la polymérisation du polymère d'oléfine contenant un groupe polaire a été réalisée à l'aide d'un processus de dissolution, de préférence avec un système de catalyseur comprenant un catalyseur métallique ou un précurseur de catalyseur comprenant un métal issu du groupe 3-8, plus préférentiellement issu du groupe 3-6, et/ou dans lequel le catalyseur métallique comprend un métal sélectionné dans le groupe consistant en Ti, Zr, Hf, V, Cr, Fe, Co, Ni, Pd, de préférence Zr ou Hf, de préférence un catalyseur à site unique homogène, plus préférentiellement un complexe d'hafnium d'un aryloxyéther polyvalent ou un complexe de zirconium d'un aryloxyéther polyvalent.

11. Polymère d'oléfine contenant un groupe polaire selon l'une des revendications précédentes, dans lequel il présente au moins un parmi ce qui suit, de préférence deux, plus préférentiellement trois, plus préférentiellement quatre, plus préférentiellement tout ce qui suit :
- Masse moléculaire moyenne en nombre (*M*ₙ) entre 5 et 50 kg/mol, de préférence de 10 à 50 kg/mol, de préférence entre 20 et 50 kg/mol, mesurée par le procédé décrit dans la section « Chromatographie d'exclusion sur gel (SEC) » de la section Procédés de mesure de la présente divulgation,
- Teneur en cristallinité (*X_{c}*) inférieure à 30 %, de préférence inférieure à 15 %, plus préférentiellement inférieure à 10 %, mesurée par le procédé décrit dans la section « Analyse calorimétrique différentielle (DSC) » de la section Procédés de mesure de la présente divulgation,
- Enthalpie (ΔH) entre 5 et 65 J/g, de préférence de 5 à 30 J/g, mesurée par le procédé décrit dans la section « Analyse calorimétrique différentielle (DSC) » de la section Procédés de mesure de la présente divulgation,
- Indice de polydispersité (*Ð*) de 2 à 6, de préférence entre 3 et 6, plus préférentiellement entre 4 et 6, mesuré par le procédé décrit dans la section « Chromatographie d'exclusion sur gel (SEC) » de la section Procédés de mesure de la présente divulgation,
- Température de fusion (*Tₘ*) entre 40 et 120 °C, mesurée par le procédé décrit dans la section « Analyse calorimétrique différentielle (DSC) » de la section Procédés de mesure de la présente divulgation.

12. Utilisation du polymère d'oléfine contenant un groupe polaire selon l'une des revendications précédentes, pour la fabrication d'un adhésif thermofusible, d'encapsulants photovoltaïques, de liants bitumineux, de modificateurs de surface pour polyoléfine de préférence pour l'automobile et les appareils ménagers, et de compatibilisant.

13. Utilisation d'un adhésif thermofusible selon l'une des revendications précédentes pour coller ensemble des métaux, du verre, de la pierre, du bois, des polymères polaires ou des métaux au verre, des métaux à la pierre, des métaux au bois, des métaux aux polymères polaires, du verre à la pierre, du verre au bois, du verre aux polymères polaires, de la pierre au bois, de la pierre aux polymères polaires, du bois aux polymères polaires, des métaux aux polyoléfines, du verre aux polyoléfines, de la pierre aux polyoléfines, du bois aux polyoléfines ou des polymères polaires aux polyoléfines, dans laquelle la pierre est un matériau minéral tel que, par exemple, du granit, du basalte, du calcaire, ou une pierre artificielle telle que du béton ou de la brique.
